(19) Europäisches Patentamt
European Patent Office
Office européen des brevets

(11) EP 1 725 508 B1

(12) **EUROPEAN PATENT SPECIFICATION**

(45) Date of publication and mention of the grant of the patent:
**13.02.2008 Bulletin 2008/07**

(21) Application number: **05721190.6**

(22) Date of filing: **15.03.2005**

(51) Int Cl.:
***C04B 24/26*** *(2006.01)* ***C04B 24/12*** *(2006.01)*

(86) International application number:
**PCT/JP2005/005040**

(87) International publication number:
**WO 2005/087684 (22.09.2005 Gazette 2005/38)**

# (54) ADDITIVE FOR HYDRAULIC MATERIAL

ADDITIV FÜR HYDRAULISCHES MATERIAL

ADDITIF POUR MATERIAU HYDRAULIQUE

(84) Designated Contracting States:
**DE IT**

(30) Priority: **16.03.2004 JP 2004074016**

(43) Date of publication of application:
**29.11.2006 Bulletin 2006/48**

(73) Proprietor: **Nippon Shokubai Co.,Ltd.**
**Osaka-shi, Osaka 541-0043 (JP)**

(72) Inventors:
- **MASANAGA, Mari**
**Osaka 564-0061 (JP)**
- **HIRATA, Tsuyoshi**
**6550004 (JP)**

(74) Representative: **Killin, Stephen James et al**
**Venner Shipley LLP**
**20 Little Britain**
**London EC1A 7DH (GB)**

(56) References cited:
**EP-A- 1 112 984** **EP-A- 1 350 775**

- **DATABASE WPI Derwent Publications Ltd., London, GB; AN 1985-059648 XP002327546 -& JP 60 016846 A (NIPPON NYUKAZAI CO LTD) 28 January 1985 (1985-01-28)**
- **DATABASE WPI Derwent Publications Ltd., London, GB; AN 1984-217049 XP002327547 & JP 59 128250 A (NIPPON CEMENT KK, SANYO CHEM IND LTD) 24 July 1984 (1984-07-24)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 725 508 B1

## Description

Technical Field:

This invention relates to an additive for a hydraulic material. More particularly, this invention relates to an additive for a hydraulic material which can improve fluidity and dispersibility of a hydraulic material, particularly a concrete member, and reduce the shrinkage of the material due to drying.

Description of the Related Art:

A hydraulic material yields a hardened product which excels in strength and durability and, therefore, has been extensively used in a cement composition such as cement paste, mortar, and concrete and have been serving as indispensable requisites for the building of civil engineering and constructional structures. The hydraulic material often entails a problem that after they harden, unaltered water remaining therein is released due to conditions including ambient temperature and humidity and the drying shrinkage possibly induced thereby proceeds to eventually give rise to a crack in the hardened product. It has been pointed out that the cracking not only impairs the beauty of a structure but also, in the long run, induces numerous complex degradations such as infiltration of such deteriorating factors as air (particularly carbon dioxide gas) and rainwater (particularly acid and chloride ions) through the crack, carbonation of concrete, and eventual promotion of corrosion of the steel reinforcement. In recent years, since the early deterioration of such concrete structures has been causing serious social concern, the structures which repress cracking and excel in durability have been gaining in popularity. At present, therefore, the importance of repressing the advance of drying shrinkage in civil engineering and constructional structures has been finding recognition and the technical innovations directed toward the repression have been actively performed.

From this background, numerous research reports concerning the drying shrinkage have been appearing. The methods which are available for reducing the shrinkage (and consequently repressing the cracking) include a method which utilizes an expansive additive, a method which reduces an unit water content of a concrete composition by using a water-reducing agent, and a method which uses a drying shrinkage-reducing agent, for example. In these methods, the method which reduces the unit water content by the use of a water-reducing agent has been most extensively adopted as the simplest approach. As the water-reducing agents, naphthalene type, aminosulfonic acid type, and polycarboxylic acid type products, and so forth have been now commercially available. In the case of the polycarboxylic acid type air-entraining and high-range water-reducing admixtures having the most outstanding characteristic properties, various water-soluble vinyl copolymers have been proposed (see JP-A HEI 8-53522, JP-A HEI 8-290948, JP-A HEI 8-290955, JP-A HEI 9-2855, and JP-A HEI 10-81549, for example). These water-reducing agents, however, have no fully satisfactory drying shrinkage-reducing property and are recommended to be used in combination with an expansive additive and a drying shrinkage-reducing agent, as occasion demands. As the drying shrinkage-reducing agent to be additionally used in this case, various compounds have been adopted (see JP-A SHO 59-21557, JP-A SHO 62-61450, and JP-A SHO 59-3430, and Japanese Patent No. 2825855, for example). In these publications, JP-A SHO 59-21557 discloses a drying shrinkage-preventing agent for cement which contains a polymer having propylene oxide and ethylene oxide added thereto. JP-A SHO 62-61450 discloses a drying shrinkage-reducing agent which contains an alkylene oxide adduct of a diphenyl methane derivative.

Disclosure of Invention:

Since an expansive additive and a drying shrinkage-reducing agent are invariably required to be incorporated in increased amounts to a concrete composition and since the drying shrinkage-reducing agent has a high product price, the incorporation of these agents results in markedly heightening the price of concrete per unit volume. This problem constitutes one of the causes for preventing the drying shrinkage-reducing agent from disseminating in the market.

As a measure to solve the problems, JP-A 2001-247346, for example, discloses a polymer resulting from graft polymerizing an ethylenically unsaturated carboxylic acid to an alkoxypolyalkylene glycol. The polymer which is disclosed in JP-A 2001-247346, however, cannot solve the problem satisfactorily because it cannot simultaneously satisfy dispersing property and drying shrinkage-reducing property.

The desirability of developing an additive for a concrete material which is capable of effectively reducing drying shrinkage and imparting satisfactory fluidity/dispersibility to a concrete member has been finding growing recognition. The additive of this ideal performance, however, has not been perfected to date.

This invention has been accomplished in consideration of the above situations and is aimed at providing an additive for a hydraulic material which is capable of effectively reducing drying shrinkage.

Another object of this invention is to provide an additive for a hydraulic material which is capable of effectively reducing drying shrinkage and imparting fully satisfactory fluidity/dispersibility to a hydraulic material composition such

as concrete members.

Still another object of this invention is to provide an additive composition for a hydraulic material which is capable of effectively reducing drying shrinkage.

Yet another object of this invention is to provide an additive composition for a hydraulic material which is capable of effectively reducing drying shrinkage and exhibiting outstanding fluidity/dispersibility as well.

The present inventors, as a result of the diligent study performed on various compounds with a view to accomplishing the objects mentioned above, have found that a compound obtained by introducing a hydrocarbon group of 4 - 30 carbon atoms as a hydrophobic group into a side chain of a polyamine compound can manifest excellent drying shrinkage reducing effects and, therefore, is useful as an additive for a hydraulic material. Besides the knowledge just described, they have also found that a compound obtained by introducing further into the polyamine compound a side chain originating in an oxyalkylene, carboxylic acid/salt, and hydroxyalkyl ester in addition to the hydrocarbon group of 4 - 30 carbon atoms is capable of simultaneously manifesting excellent fluidity (dispersibility) and drying shrinkage reducing property and, therefore, is useful as an additive for a hydraulic material. The present invention has been perfected based on the knowledge.

To be specific, the objects mentioned above can be accomplished by an additive for a hydraulic material comprising a polyamine compound having a hydrocarbon group of 4 - 30 carbon atoms as a side chain (1) as an essential component.

Preferably, the polyamine compound according to this invention further comprises as a side chain (2) at least one group selected from the class consisting of oxyalkylene groups of 2 - 4 carbon atoms; -COOZ (wherein Z stands for a hydrogen atom, an univalent metal, a divalent metal, an ammonium group, an organic amine group, or a $-(R^2O)_n-R^3$, wherein $R^2O$ stands for one member or a mixture of two or more members,selected among oxyalkylene groups of 2 - 18 carbon atoms, n stands for an average addition mol number of oxyalkylene groups ($R^2O$) and is in the range of 1 - 500, and $R^3$ stands for a hydrogen atom or a hydrocarbon group of 1 - 3 carbon atoms); and $-SO_3W$ (wherein W stands for a hydrogen atom, an univalent metal, a divalent metal, an ammonium group, or an organic amine group).

The objects mentioned above can also been accomplished by a shrinkage-reducing composition containing at least one additive for a hydraulic material of this invention and a dispersing agent.

The additive for a hydraulic material of this invention is characterized by being, a polyamine compound having a hydrocarbon group of 4 - 30 carbon atoms as a side chain (1) as an essential component. The polyamine compound according this invention is capable of effectively repressing drying shrinkage of a cement material. By using the additive for a hydraulic material of this invention, therefore, the drying shrinkage can be effectively repressed and consequently the durability of concrete can be promoted significantly. Then, the polyamine compound according to this invention, by further introducing therein at least one group selected from the class consisting of oxyalkylene groups of 2 - 4 carbon atoms; -COOZ (wherein Z stands for a hydrogen atom, an univalent metal, a divalent metal, an ammonium group, an organic amine group, or a - $(R^2O)_n-R^3$, wherein $R^2O$ stands for one member or a mixture of two or more members selected from oxyalkylene groups of 2 - 18 carbon atoms, n stands for an average addition mol number of oxyalkylene groups ($R^2O$) and is in the range of 1 - 500, and $R^3$ stands for a hydrogen atom or a hydrocarbon group of 1 - 3 carbon atoms) ; and $-SO_3W$ (wherein W stands for a hydrogen atom, an univalent metal, a divalent metal, an ammonium group, or an organic amine group), can impart excellent fluidity to the additive. The use of an additive for a hydraulic material containing such a compound, therefore, can further improve the drying shrinkage reducing effects and the fluidity (dispersibility) , decrease the necessary unit water content, and improve such qualities of concrete as strength.

The additive for a hydraulicmaterial of this invention, when applied to such a hydraulic material as cement paste, mortar, or concrete, can enjoy high general-purpose properties as manifesting outstanding crack-proofing effects, exalting the strength and the durability of a hardened hydraulic product, improving the safety of civil engineering and constructional structures, and decreasing the cost for repair.

The above and other objects, features and advantages of the present invention will become clear from the following description of the preferred embodiments and illustrated in the attached drawings.

Best Mode for Carrying Out the Invention:

Now, the modes for carrying out the invention will be described in detail below.

The first aspect of this invention is to provide an additive for a hydraulic material having a polyamine compound containing a hydrocarbon group of 4 - 30 carbon atoms as a side chain (1) as an essential component. The side chain-containing polyamine compound according to this invention manifests outstanding drying shrinkage-reducing properties. In the present specification, the polyamine compound in which a hydrocarbon group of 4 - 30 carbon atoms has been introduced will be referred to as "side chain (1)-containing polyamine compound" and the polyamine compound prior to this introduction to as "polyamine compound (I)." The definite mechanism for enabling the side chain-containing polyamine compound according to this invention to attain the repression of the drying shrinkage remains yet to be elucidated but may be logically explained by the following supposition. As the hardened concrete product dries, the water (free water)

in the hardened product begins to move. It has been known that during this movement of water, the shrinkage of the hardened product occurs because the surface tension of water between the surface of the hardened product and the water gives rise to a tensile stress. Thus, the drying shrinkage-reducing agent is aimed at lowering the surface tension of the water thereby reducing the tensile stress between the surface of the hardened concrete product and the water. In the side chain (1)-containing polyamine compound according to this invention, it is considered that the hydrocarbon group of 4 - 30 carbon atoms which is an essential component serves as a hydrophobic group and this hydrophobic group moiety of the polyamine compound, when the side chain (1) -containing polyamine compound is dissolved in water, can manifest an effect of lowering the surface tension of water and consequently reduce the drying shrinkage.

The side chain (1)-containing polyamine compound according to this invention preferably contains, in addition to the side chain (1), at least one group selected from the class consisting of oxyalkylene groups of 2 - 4 carbon atoms; -COOZ (wherein Z stands for a hydrogen atom, an univalent metal, a divalent metal, an ammonium group, an organic amine group, or a $-(R^2O)_n-R^3$, wherein $R^2O$ stands for one member or a mixture of two or more members selected from oxyalkylene groups of 2 - 18 carbon atoms, n stands for an average addition mol number of oxyalkylene groups ($R^2O$) in the range of 1 - 500, and $R^3$ stands for a hydrogen atom or a hydrocarbon group of 1 - 3 carbon atoms) ; and $-SO_3W$ (wherein W stands for a hydrogen atom, an univalent metal, a divalent metal, an ammonium group, or an organic amine group) as a side chain (2), as described in detail below (the compound having the side chains (1) and (2) occasionally referred to briefly as "side chains (1, 2)-containing polyamine compound herein below). The side chains (1,2)-containing polyamine compound according to this invention is capable of effectively reducing drying shrinkage and imparting fluidity (dispersibility) to a hydraulic material composition. Though the definite mechanism for enabling the side chains (1,2)-containing polyamine compound according to this invention to manifest outstanding drying shrinkage-reducing property and fluidity (dispersibility) remains yet to be elucidated, it may be logically explained by the following proposition. Specifically, as regards the drying shrinkage-reducing property, it is considered that by introducing such a hydrophobic group as the hydrocarbon group of 4 - 30 carbon atoms as a side chain into the polyamine compound in the same manner as described above, it is made possible to lower the interfacial tension between the hardened product and the water, reduce the tensile stress of the water which causes the drying shrinkage, and consequently repress the drying shrinkage. Further, it is considered that the introduction of the group originating in oxyalkylene, carboxylic acid or a salt thereof, and a sulfonic acid or a salt thereof as the side chain (2) results in manifesting the effect of imparting a hydrophobic nature to the cement surface and reducing the tensile stress between the cement surface and the water and consequently further exalting the drying shrinkage reducing property. As regards the fluidity/dispersibility as well as the advantages as mentioned above, it is considered that the side chain (1) according to this invention, owing to the introduction of the hydrophobic group moiety of the side chain (1) which is an essential component, serves as a surfactant such as an AE agent, permits the hydraulic material composition to entrain air of good quality and produces the action of a ball bearing to impart good dispersbility/fluidity to the hydraulic material composition. It is further considered that the introduction of the side chain (2) results in inducing the adsorption of the polyamine compound to the cement particles and consequently further exalting the improvement of dispersibility/fluidity by the side chain (1).

The side chain (1)-containing polyamine compound according to this invention preferably contains a -COOZ' group (wherein Z' stands for a hydrocarbon group of 1 - 3 carbon atoms) as a side chain (3) in addition to the side chain (1) or the side chains (1) and (2), which will be described in detail below (this compound occasionally referred to briefly as a side chains (1,3)-containing polyamine compound hereinafter). In this case, it is particularly favorable to have the side chain (3) introduced into a polyamine compound at a ratio of not more than 2.4 per one side chain (1). The side chains (1,3)-containing polyamine compound according to this invention which has introduced therein the side chain (3) in such a specific amount can effectively reduce the drying shrinkage and impart fluidity (dispersibility) to a hydraulic material composition. Though the definite mechanism for enabling the side chains (1,3)-containing polyamine compound according to this invention to manifest the outstanding drying shrinkage-reducing property and the fluidity (dispersbility) remains yet to be elucidated, it may be logically explained by the following supposition. To be specific, it is considered that the introduction of the side chain (3) results in inducing the adhesion of the polyamine compound to cement particles, imparting a hydrophobic nature to the surface of the hardened hydraulic product, lowering the tensile stress between the hardened product and the water, consequently exalting the drying shrinkage-reducing effect further, and further improving the dispersibility/fluidity attained by the side chain (1).

The additive for a hydraulicmaterial of this invention, therefore, can be advantageously used in portland cements including ordinary, high-early-strength, moderate heat, low heat, and sulfate resistant, hydraulic cements such as Blite-rich cement, calcium-aluminate cement, portland blast furnace slag cement, portland fly-ash cement, and various blended cements, or other hydraulic materials than cement such as gypsum for the purpose of effectively reducing the drying shrinkage, and also for the purpose of imparting the fluidity (dispersibility) to a hydraulic material composition.

The polyamine compound (I) according to this invention is a compound which has a primary and/or secondary amino group contained in the molecular unit thereof. This polyamine compound (I) does not need to be particularly restricted but is only required to having a primary and/or secondary amino group contained in the molecular unit thereof. The polyamine compounds (I) include amines having such groups and derivatives thereof, for example. As typical

examples of the amines, polyalkylene imines obtained by the polymerization or copolymerization of an alkylene imine (such as ethylene imine, azetidine, pyrrolidine, and piperidine) such as polyethylene imine obtained by the polymerization of ethylene imine; polyamide polyamines obtained by the condensation of such polyalkylene imine as mentioned above and/or such (poly)alkylene polyamine as ethylene diamine, diethylene triamine, triethylene tetramine, tetraethylene pentamine, and pentaethylene hexamine with such polybasic acid as sulfuric acid, phosphoric acid, and adipic acid; polyurea polyamines obtained by the reaction of a polyalkylene imine and/or an alkylene imine with urea; polyamide polyester polyamines obtained by the copolymerization of an alkylene imine with such acid anhydride as phthalic anhydride; and polyallyl amines obtained by polymerization of allyl amine, diallyl amine, and/or hydrochloride thereof, polydiallyl amine-sulfur dioxide copolymers obtained by the copolymerization of diallyl amine and/or hydrochloride thereof with sulfur dioxide, and diallyl lamine-maleic acid copolymers obtained by the copolymerization of diallyl amine and/or hydrochlride thereof with maleic acid may be cited. As typical examples of the polyamine derivatives, the compounds resulting from the addition of alkylene oxide such as ethylene oxide and propylene oxide, (meth)acrylic esters such as butyl acrylate and methyl methacrylate, and an $\alpha,\beta$-unasturated amide compound such as acrylamide to the polyamine may be cited. While the polyamine compound (I) according to this invention may be produced by the polymerization or the reaction of addition as mentioned above, a commercial product may be used. As typical examples of the commercial product, Epomin (polyethylene imine) SP-003, SP-006, SP-012, SP-018, SP-200, SP-110, and P-1000 (made by Nippon Shokubai Co., Ltd.), Polyallylamine PAA-03, PAA-05, PAA-08, PAA-15, PAA-15B, PAA-10C, and PAA-25 (made by Nittobo K.K.), and diallylamine-maleic acid copolymer PAS-410 and PAS-410SA (made by Nittobo K.K.) may be cited. Among other polyamine derivatives cited above, polyalkylene imine, polyamide polyamine, polyallyl amine, polyethylene imine, condensate of ethylene diamine with adipic acid, condensate of triethylene tetramine with adipic acid, and diallylamine-maleic acid copolymer prove advantageous and polyalkylene imine, polyamide polyamine, and polyallyl amine prove particularly advantageous. The polyamine compounds (I) according to this invention may be used either singly or in the form of a mixture of two or more members.

The molecular weight of the polyamine compound (I) according to this invention does not need to be particularly restricted. It is preferably in the range of 300 - 500,000. In this case, if the molecular weight falls short of 300, the shortage would possibly result in obstructing acquisition of sufficient dispersibility or drying shrinkage-reducing property, particularly the drying shrinkage-reducing property because of the small amount of the side chain (1) to be added. Conversely, if the molecular weight exceeds 500,000, the overage would possibly result in suffering the polyamine compound (I) to grow excessively and consequently excessively enlarging the molecular weight of the polyamine compound after the introduction of the side chain (1) and optionally the side chains (2)/(3) into the polyamine compound (I) and lowering the dispersibility. In consideration of the drying shrinkage-reducing property and the fluidity (dispersibility), the molecular weight of the polyamine compound (I) is more preferably in the range of 300 - 300, 000, further more preferably in the range of 300 - 100,000, and most preferably in the range of 300 - 20,000. The molecular weight reported in the present specification means a number average molecular weight (Mn) which is determined by gel permeation chromatography (GPC).

The side chain (1)-containing polyamine compound according to this invention has a hydrocarbon group of 4 - 30 carbon atoms introduced as the side chain (1) into the polyamine compound (I). The side chain (1)-containing polyamine compound according to this invention may have a single side chain (1) introduced into the polyamine compound (I) or may allow two or more side chains (1) to coexist in the polyamine compound (I). In this case, the method for the introduction of the side chain (1) does not need to be particularly restricted but may be properly selected from the known methods. Generally, the introduction can be accomplished by causing the polyamine compound (I) to react with a compound represented by the following formula (1):

[Chemical 1]

$$R^1 - X^1 \qquad (1)$$

(the compound of the formula (1) is referred to as "compound (II) " hereinafter). When this compound (II) reacts with the polyamine compound (I), the active amine hydrogen of the polyamine compound (I) is substituted with the hydrophobic group (group $R^1$) of the compound (II) and the hydrophobic group is introduced as the side chain (1) into the polyamine compound (I). By this introduction of the hydrophobic group, the polyamine compound, when dissolved in water, can manifest an effect of lowering the surface tension with water and, consequently the side chain(1)-containing polyamine compound can bring about the effect of reducing a tensile stress between the surface of the hardened product and the water generated by the movement of the water in the hardened product while the hardened product is dried and effectively reduce the drying shrinkage.

In the formula (1), $R^1$ stands for a hydrocarbon group of 4 - 30 carbon atoms. As typical examples of the

hydrocarbon group, linear and branched alkyl groups of 4 - 30 carbon atoms such as n-butyl, isobutyl, sec-butyl, tert-butyl, pentyl, isopentyl, neopentyl, hexyl, heptyl, octyl, nonyl, decyl, undecyl, dodecyl, isooctyl, 2,3,5-trimethylhexyl, 4-ethyl-5-methyloctyl, 2-ethylhexyl, tetradecyl, octadecyl, and icosyl; cyclic alkyl groups such as cyclobutyl, cyclopentyl, cyclohexyl, cycloheptyl, and cyclooctyl; aryl groups such as phenyl, benzyl, phenetyl, o-, m-, or p-tolyl, 2,3- or 2,4-xylyl, mesityl, naphthyl, anthryl, phenanthryl, biphenylyl, benzhydryl, trityl, and pyrenyl, and alkyl group-containing aryl groups ((alkyl)aryl groups); hydrogenated aryl groups resulting from hydrogenating at least part of the aryl groups and alkyl group-containing hydrogenated aryl groups ((alkyl) hydrogenated aryl groups); and (alkyl)aralkyl groups such as benzyl, methylbenzyl, phenetyl, naphthylmethyl, and naphthylethyl may be cited. Then, $X^1$ stands for an atomic group containing a functional group capable of reacting with an amino group. The atomic group does not need to be particularly restricted but is only required to contain a functional group capable of reacting an amino group. As typical examples of the atomic group, groups originating in glycidyl ether, epoxy, isocyanate, thioisocyanaate, (meth)acrylate, aldehyde ketone, halogenated alkyls, halogenated acyl, carboxylic acids, and carboxylic anhydrides may be cited. Among other atomic groups cited above, glycidyl ether, epoxy, isocyanate, (meth)acrylate, halogenated alkyls, and carboxylic acids prove favorable and epoxy, (meth)acrylate, glycidyl ether, halogenated alkyls, and carboxylic acids prove particularly favorable.

As typical examples of the compound (II), glycidyl ethers of higher alcohols such as octyl glycidyl ether, lauryl glycidyl ether, stearyl glycidyl ether, and 2-ethylhexyl glycidyl ether; glycidyl ethers of alkyl phenols such as octylphenyl glycidyl ether, nonylphenyl glycidyl ether, laurylphenyl glyicidyl ether, and stearylphenyl glycidyl ether; glycidyl ethers of alkyl cycloalkanols such as octyl cyclopentyl glycidyl ether, octyl cyclohexyl glycidyl ether, nonyl cyclopentyl glycidyl ether, nonyl cyclohexyl glycidyl ether, lauryl cyclopentyl glycidyl ether, lauryl cyclohexyl glycidyl ether, stearyl cyclopentyl glycidyl ether, and stearyl cyclohexyl glycidyl ether; glycidyl ethers of alkyl benzyl alcohols such as octyl benzyl glycidyl ether, nonyl benzyl glycidil ether, lauryl benzyl glycidyl ether, and stearyl benzyl glycidyl ether; 1,2-epoxyalkanes such as epoxyhexanes, $\alpha$-olefin epoxide which is a mixture of 12 - 14 carbon atoms, $\alpha$-olefin epoxide which is a mixture of 16 - 18 carbon atoms, $\alpha$-olefin epoxide which is a mixture of 20 - 28 carbon atoms, and $\alpha$-olefin epoxide which is a mixture of not less than 30 carbon atoms; alkyl isocyanates such as octyl isocyanate, decyl isocyanate, and octadecyl isocyanate; monoisocyanate compounds obtained by the reaction of alcohol such as octanol, lauryl alcohol, and stearyl alcohol with diisocyanate such as tolylene diisocyanate; halogenides formed by substituting a terminal hydroxyl group of alcohol such as octanol, lauryl alcohol, and stearyl alcohol with a halogen atom such as chlorine, bromine, and iodine; saturated fatty acids such as lauric acid, myristic acid, palmitic acid, and stearic acid; unsaturated fatty acids such as oleic acid, linolic acid, linolenic acid, and eleostearic acid; and (meth) acrylic esters such as butyl (meth) acrylate, cyclohexyl (meth)acrylate, 2-ethylhexyl (meth)acrylate, lauryl (meth)acrylate, myristyl (meth)acrylate, and stearyl (meth) acrylate may be cited. These compounds may be used either singly or in the form of a mixture of two or more members. When two or more kinds of the compound (II) are used, at least one kind of the compound (II) is preferably a compound having a functional group $X^1$ which is capable of reacting with an amino group and selected from the class consisting of epoxy, isocyanate, thioisocyanate, aldehyde ketone, halogenated alkyl, and halogenated acyl. The amount of the compound (II) to be used (namely, the amount of the side chain (1) to be introduced) does not need to be particularly restricted so long as that a sufficient amount of the side chain (1) be introduced into the polyamine compound(I). In consideration of the reactivity with the polyamine compound (I), however, the amount of the compound (II) is preferably in the range of 0.01 - 0.90 mol, 0.05 - 0.90 mol, 0.10 - 0.85 mol, 0.17 - 0.80 mol, and 0.23 - 0.80 mol, based on one active amine hydrogen of the polyamine compound (I), in this order.

In this invention, the side chain (1)-containing polyamine compound according to this invention can be obtained by causing the polyamine compound (I) to react with the compound (II) thereby inducing the addition and introduction of a hydrocarbon group of 4 - 30 carbon atoms as the side chain (1) into the polyamine compound (I). In this case, the conditions for the reaction of the polyamine compound (I) with the compound (II) do not need to be particularly restricted but are only required to allow the reaction to proceed satisfactorily enough to effect the introduction of the side chain (1) in a sufficient amount into the polyamine compound (I). For example, the polyamine compound (I) and the compound (II), in their unmodified forms or optionally diluted with a solvent, preferably dissolved, dispersed, or suspended in a solvent, and most preferably dissolved in a solvent, can be reacted at a temperature preferably in the range of room temperature - 200°C and more preferably in the range of 40 - 100°C for a period in the range of 0. 5 - 10 hours, preferably in the range of 0.5 - 6 hours. Though this reaction may be carried out under normal pressure, an increased pressure, or a reduced pressure, it is preferably performed under normal pressure. In this case, the solvent to be used optionally for the purpose of dissolving/dispersing/suspending the relevant compounds does not need to be particularly restricted. Preferably, however, it is capable of dissolving the polyamine compound (I), the compound (II), or the side chain (1) -containing polyamine compound and is inert thereto. As typical examples of the solvent, water, alcohols such as methanol, ethanol, propanol, isopropanol, butanol, pentanol, hexanol, isobutyl alcohol, and isoamyl alcohol; hydrocarbons such as n-butane, propane, benzene, cyclohexane, and naphthalene; esters such as methyl acetate, ethyl acetate, ethyl benzoate, and ethyl lactate; and polyhydric alcohols such as (poly)ethylene glycol, ethylene glycol monobutyl ether, ethylene glycol monobutyl ether acetate, tetraethylene glycol, (poly)propylene glycol, and propylene glycol monobutyl ether and derivatives thereof may be cited. Among other solvents cited above, water, alcohols, hydrocarabons, and

esters prove favorable and water, methanol, ethanol, isopropanol, cyclohexane, ethylene glycol, ethylene glycol monobutyl ether, and ethyl acetate prove particularly favorable. These solvents selected for the polyamine compound (I), the compound (II), and the side chain (1)-containing polyamine compound may be identical or different each other. It is nevertheless preferable to use the identical solvents in due consideration of the operational efficiency and the time and labor during the next step of removal of the solvent. The reaction is allowed to use a catalyst for the purpose of promoting the reaction. This catalyst does not need to be particularly restricted but is only required to promote the reaction. Any of the known catalysts maybe adopted. As typical examples of the catalyst, titanium type catalysts such as tetrabutyl titanate and tetraisopropyl titanate; tin type catalysts such as stannous chloride, tin octylate, and monobutyl tin oxide; and acids such as p-toluene sulfonic acid may be cited.

The side chain (1)-containing polyamine compound obtained as described above does not need to be particularly restricted but is only required to be produced by the reaction mentioned above. The side chain (1)-containing polyamine compounds include polyethylene imine/α-olefin epoxides such as polyethylene imine/epoxyhexane, polyethylene imine/α-olefin epoxide which is a mixtures of 12 - 14 carbon atoms, and polyethylene imine/α-olefin epoxide which is a mixtures of 16 - 18 carbon atoms; polyethylene imine/alkyl (meth)acrylates such as polyethylene imine/butyl (meth) acrylate, polyethylene imine/pentyl (meth)acrylate, polyethylene imine/hexyl (meth)acrylate, polyethylene imine/cyclohexyl (meth) acrylate, polyethylene imine/2-ethylhexyl (meth)acrylate, polyethylene imine/dodecyl (meth)acrylate, polyethylene imine/myristyl (meth)acrylate, and polyethylene imine/stearyl (meth)acrylate; and polyethylene imine/α-olefin epoxide which is a mixtures of 12-14 carbon atoms/butyl (meth) acrylate, polyethylene imine/α-olefin epoxide which is a mixtures of 12 - 14 carbon atoms/2-ethylhexyl (meth)acrylate, polyethylene imine/α-olefin epoxide which is a mixtures of 12 - 14 carbon atoms/cyclohexyl (meth) acrylate, polyethylene imine/α-olefin epoxide which is a mixtures of 12 - 14 carbon atoms/dodecyl (meth)acrylate, polyethylene imine/α-olefin epoxide which is a mixtures of 12 - 14 carbon atoms/myrystyl (meth) acrylate, and polyethylene imine/α-olefin epoxide which is a mixtures of 12 - 14 carbon atoms/stearyl (meth)acrylate, for example.

The side chain (1)-containing polyamine compound which is obtained as described above has an active amine hydrogen of the polyamine compound (I) substituted with the side chain (1) and is consequently converted into the side chain (1)-containing polyamine compound having the following structure:

[Chemical 2]

In the case of polyalkylene imine,

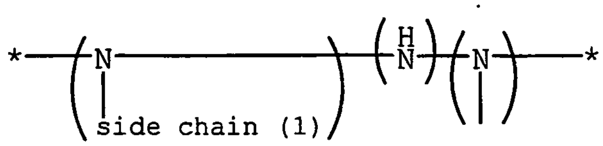

or

In the case of polyallyl amine,

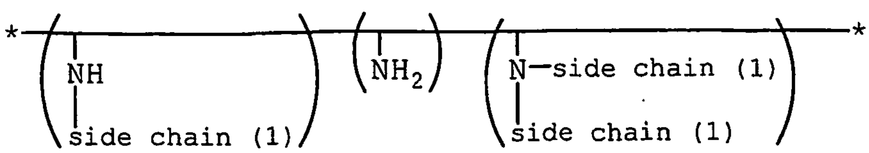

In this invention, the side chain (1) does not need to be perfectly substituted with an active amine hydrogen but may be in a partly substituted form as shown in the structure given above. Owing to the presence of the hydrocarbon group of 4 - 30 carbon atoms which is the hydrophobic group of the compound (II) (side chain (1)) , the side chain (1)-containing polyamine compound according to this invention, when dissolved in water, manifests an effect of lowering the surface tension of water and consequently reduces the tensile stress generated between the surface of the hardened hydraulic product and water and represses the drying shrinkage. The side chain (1) -containing polyamine compound, by serving as a surfactant like an AE agent and enabling a hydraulic material composition to entrain air of good quality, can function like a ball bearing, exalt the dispersibility/fluidity, and consequently impart excellent drying shrinkage-reducing property and fluidity/dispersibility simultaneously to the hydraulic material composition. When the side chain

(1) can generate a carboxylic acid in consequence of hydrolysis, the produced polyamine compound is adsorbed to the cement particles to further improve the dispersibility/fluiidity. The additive for a hydraulic material which incorporates therein the side chain (1)-containing polyamine compound, therefore, is ideally usable for laying a durable concrete.

According to this invention, the polyamine compound (I) may have as a side chain (2) at least one group selected from the class consisting of oxyalkylene groups of 2 - 4 carbon atoms; -COOZ (wherein Z stands for a hydrogen atom, an univalent metal, a divalent metal, an ammonium group, an organic amine group, or a - $(R^2O)_n$-$R^3$, wherein $R^2O$ stands for one member or a mixture of two or more members selected from oxyalkylene groups of 2 - 18 carbon atoms, n stands for an average addition mol number of oxyalkylene groups ($R^2O$) and is in the range of 1 - 500, and $R^3$ stands for a hydrogen atom or a hydrocarbon group of 1- 3 carbon atoms); and -$SO_3W$ (wherein W stands for a hydrogen atom, an univalent metal, a divalent metal, an ammonium group, or an organic amine group), in addition to the side chain (1). The introduction of the side chain (2) results in inducing the adsorption of the polyamine compound to the cement particles and imparting hydrophobic nature to the surface of the hardened hydraulic product and consequently lowering the tensile stress between the hardened hydraulic product and the water and further exalting the drying shrinkage-reducing effect. Further, the introduction of the side chain (2) results in inducing the adsorption of the polyamine compound to the cement particles and consequently improving the dispersibility/fluidity attained by the side chain (1). In the present specification, the polyamine compound having the side chains (1) and (2) will be referred to as "side chains (1,2) -containing polyamine compound". The side chains (1, 2)-containing compound according to this invention may have a single side chain (2) introduced into the polyamine compound (I) or two or more kinds of side chain (2) introduced into the polyamine compound (I).

In this invention, the introduction of the side chain (2) does not need to be particularly restricted but may be accomplished by any of the known methods. The side chains (1,2)-containing polyamine compound according to this invention may be generally produced by causing the side chain (1)-containing polyamine compound produced as described above to react with an oxyalkylene of 2 - 4 carbon atoms and/or a compound represented by the following formula (2):

[Chemical 3]

$$X^2 - Y \qquad (2)$$

(the compound of the formula (2) is referred to as "compound (III)" hereinafter). Otherwise, the side chains (1,2) -containing polyamine compound may be produced by first causing the polyamine compound (I) to react with an oxyalkylene of 2 - 4 carbon atoms and/or the compound (III) of the formula (2) and subsequently causing the resultant reaction product to react further with the compound (II) of the formula (1). The side chains (1,2)-containing polyamine compound thus obtained, by the introduction of the side chain (2), can induce the impartation of hydrophobic nature to the surface of the cement when the compound adsorbs on the cement surface, manifest an effect of reducing the tensile stress between the cement surface and the water, and consequently further repress the drying shrinkage.

In this invention, the oxyalkylene of 2 - 4 carbon atoms does not need to be particularly restricted. As preferred examples of this oxyalkylene, ethylene oxide, propylene oxide, butylene oxide, isobutylene oxide, 1-butene oxide, and 2-butane oxide may be cited. Among other oxyalkylenes cited above, ethylene oxide, propylene oxide, and butylene oxide prove more favorable and ethylene oxide and propylene oxide prove still more favorable. These oxyalkylenes may be used either singly or in the form of a mixture of two or more members or may be used in combination with the compound (III) which will be described more specifically herein below.

In the formula (2) which represents the compound (III), $X^2$ stands for an atomic group having a functional group capable of reacting with an amino group. When this group $X^2$ reacts with an active amine hydrogen of the polyamine compound (I), the group Y is introduced as the side chain (2) into the polyamine compound (I) . The atomic group of this nature does not need to be particularly restricted but is only required to have a functional group capable of reacting with an amino group. The atomic groups of this description include the groups originating in glycidyl ether, epoxy, isocyanate, thioisocyanate, (meth)acrylate, aldehyde ketone, halogenated alkyls, and halogenated acyls, for example. Among the atomic groups cited above, glycidyl ether, epoxy, isocyalate, (meth)acrylate, and halogenated alkyls prove favorable and epoxy, (meth)acrylate, glycidyl ether, and halogenated alkyls prove particularly favorable. Then, Y stands for COOZ or $SO_3W$, preferably COOZ. In the formula: $SO_3W$ which represents the substituent "Y", W stands for a hydrogen atom, an univalent metal, a divalent meta, an ammonium group (-$NH_2$), or an organic amine group. In this case, the typical examples of the univalent metal include lithium, sodium, and potassium, and preferably sodium and potassium. As typical examples of the divalent metal, magnesium, calcium, strontium, and barium, preferably calcium and barium may be cited. As typical examples of the organic amine group, groups originating in such primary amines as methyl amine, ethyl amine, propyl amine, n-butyl amine, sec-butyl amine, tert-butyl amine, cyclohexyl amine, benzyl

amine, and phenyl amine; groups originating in such secondary amines as dimethyl amine, diethyl amine, dipropyl amine, dibutyl amine, diisobutyl amine, di-sec-butyl amine, di-tert-butyl amine, dicyclohexyl amine, dibenzyl amine, and diphenyl amine; groups originating in such tertiary amines as trimethyl amine, triethyl amine, tripropyl amine, tributyl amine, tricyclohexyl amine, tribenzyl amine, and triphenyl amine; and groups originating in such alkanol amines as ethanol amine, diethanol amine, and triethanol amine may be cited. Among other organic amine groups cited above, such alkanol amine groups as ethanol amine group, diethanol amine group, and triethanol amine group and triethyl amine groups prove favorable. W preferably stands for an univalent metal, a divalent metal, an ammonium group, or an organic amine group and more preferably stands for an univalent metal, a divalent metal, or an ammonium group. In the formula: COOZ which represents the substituent "Y", Z stands for a hydrogen atom, an univalent metal, a divalent metal, an ammonium group ($-NH_2$), an organic amine group, or $-(R^2O)_n-R^3$. In this case, since the univalent metal, the divalent metal, and the organic amine group are as defined for the substituent "W," they will be omitted from the following description. In the substituents represented by the formula: $-(R^2O)_n-R^3$, among other substituents represented by Z, $R^2O$ stands for an oxyalkylene group of 2 - 18 carbon atoms, preferably an oxyalkylene group of 2 - 8 carbon atoms, and more preferably an oxyalkylene group of 2 - 4 carbon atoms. As typical examples of the oxyalkylene group of, oxyethylene group, oxypropylene group, oxybutylene group, oxyisobutylene group, oxy 1-butene group, oxy 2-butane group, and oxystyrene group, more preferably oxyethylene group, oxypropylene group, and oxybutylene group, and still more preferably oxyethylene group and oxypropylene group may be cited. When a plurality of such oxyalkylene groups are present in one substituent "Z" (namely n in the formula (2) is an integer of not less than 2), single substituents may be present or two or more kinds of such substituents may be present in one substituent "Z." When not less than two kinds of oxyalkylene groups are present, the addition may be effected in any of random addition, block addition, and alternating addition. Among other substituents cited above, Z preferably stands for a hydrogen atom, an univalent metal, a divalent metal, or $-(R^2O)_n-R^3$ and more preferably stands for an univalent metal, a divalent metal, or $-(R^2O)_n-R^3$. Then, n stands for an average addition mol number of oxyalkylene groups ($R^2O$) and is in the range of 1-500. If n exceeds 500, the overage would possibly result in imparting excess fluidity (dispersibility) to the hydraulic material composition and consequently obstructing the addition of an amount necessary for the repression of drying shrinkage. n preferably is in the range of 1 - 300, more preferably in the range of 1 - 100, and most preferably in the range of 1 - 50. Then, $R^3$ stands for a hydrogen atom or a hydrocarbon group of 1-3 carbon atoms. In this case, as typical examples of the hydrocarbon group of 1 - 3 carbon atoms, methyl, ethyl, propyl, and isopropyl may be cited.

As typical examples of the compound (III), (meth)acrylic acids; (meth)acrylic esters such as 2-hydroxyethyl (meth)acrylate and 2-hydroxypropyl (meth)acrylate; and maleic acid, methoxy (poly)ethylene glycol (meth)acrylate, methoxy (poly)ethylene glycol (poly)propylene glycol (meth)acrylate, methoxy(poly)ethylene glycol maleate, and methoxy (poly) ethylene glycol (poly) propylene glycol maleate may be cited. These compounds (III) may be used either singly or in the form of a mixture of two or more members or may be used in combination with an oxyalkylene which has been described in detail above. Among other compounds (III) cited above, (meth)acrylic acid, maleic acid, hydroxyethyl (meth) acrylate, 2-hydroxypropyl acrylate, methoxy (poly)ethylene glycol (meth)acrylate, methoxy (poly) ethylene glycol (poly) propylene glycol (meth) acrylate, methoxy (poly) ethylene glycol maleate, and methoxy (poly)ethylene glycol (poly) propylene glycol maleate prove favorable, and acrylic acid, 2-hydroxyethyl acrylate, 2-hydroxypropyl acrylate, methoxy (poly)ethylene glycol (meth)acrylate, methoxy (poly)ethylene glycol (poly)propylene glycol (meth)acrylate, methoxy (poly) ethylene glycol maleate, and methoxy (poly)ethylene glycol (poly)propylene glycol maleate prove particularly favorable.

Then, in this invention, the amount of the oxyalkylene and/or the compound (III) to be used does not need to be particularly restricted but is only required to be sufficient for forming the side chain (1, 2)-containing polyamine compound through the reaction with the polyamine compound (I) or the side chain (1)-containing polyamine compound. In consideration of the reactivity with the polyamine compound (I) and the side chain (1)-containing polyamine compound, the total amount of the oxyalkylene and/or the compound (III) to be used preferably falls in the range of 0.01 - 0.90 mol, more preferably in the range of 0.05- 0.80 mol, still more preferably in the range of 0.10 - 0.70 mol, and most preferably in the range of 0.10- 0.60 mol, based on one active amine hydrogen of the polyamine compound (I). This invention does not prefer the presence particularly of the compound (III) in an excess amount. This is because the excess presence of the compound (III) will possibly result in obstructing fully satisfactory hardening of the hydraulic product.

In this aspect, the side chains (1,2)-containing polyamine compound according to this invention can be obtained by causing the polyamine compound (I)/side chain (1) -containing polyamine compound to react with the compound (III) and consequently accomplishing the necessary addition and introduction of the side chain (2) into the polyamine compound (I). In this case, the conditions for the reaction of the polyamine compound (I)/side chain (1)-containing polyamine compound with the compound (III) do not need to be particularly restricted but are only required to ensure the progress of the reaction and attain the introduction of the side chain (2) in a sufficient amount into the polyamine compound (I). For example, the polyamine compound (I)/the side chain (1)-containing polyamine compound, and the compound (II), in their unmodified forms or optionally diluted with a solvent, preferably dissolved, dispersed, or suspended in a solvent, and most preferably dissolved in a solvent, may be reacted at a temperature preferably in the range of room temperature - 200°C and more preferably in the range of 40 - 100°C for a period in the range of 0. 5 - 6 hours, preferably in the range

of 0.5 - 4 hours. Though the reaction may be carried out under normal pressure, an increased pressure, or a reduced pressure, it is preferably performed under normal pressure. The solvents which are optionally used for dissolving/ dispersing/suspending the individual compounds do not need to be particularly restricted. Preferably, however, they are capable of dissolving the polyamine compound (I), the side chain (1)-containing polyamine compound, the compound (III), or the side chains (1,2) -containing polyamine compound and is inert thereto. As typical examples of such solvents, water, alcohols such as methanol, ethanol, propanol, isopropanol, butanol, pentanol, hexanol, isobutyl alcohol, and isoamyl alcohol ; hydrocarbons such as n-butane, propane, benzene, cyclohexane, and naphthalene; esters such as methyl acetate, ethyl acetate, ethyl benzoate, and ethyl lactate; and polyhydric alcohols such as (poly)ethylene glycol, ethylene glycol monobutyl ether, ethylene glycol monobutyl ether acetate, tetraethylene glycol, (poly) propylene glycol, and propylene glycol monobutyl ether and the derivatives thereof maybe cited. Among other solvents cited above, water, alcohols, hydrocarbons, and esters prove favorable and water, methanol, ethanol, isopropanol, cyclohexane, ethylene glycol, ethylene glycol monobutyl ether, and ethyl acetate prove particularly favorable. Of these solvents, the same solvents or the different solvents maybe used for the polyamine compound (I), the compound (II), and the side chain (1)-containing polyamine compound. In consideration of the operational efficiency and the time and labor involved during the subsequent step for the removal of solvent, however, the same solvents are preferably used. The solvent to be used for the reaction of the polyamine compound (I) and the compound (II) and the solvent used for the aforementioned reaction may be identical or different each other. In consideration of the operational efficiency and the time and labor to be involved during the subsequent step for the removal of solvent, the same solvents are preferably used. Further, for the sake of promoting the reaction, the reaction may use a catalyst. The catalyst for this purpose does not need to be particularly restricted but may be properly selected from the known catalysts. As typical examples of the catalyst, titanium type catalysts such as tetrabutyl titanate and tetraisopropyl titanate; tin type catalysts such as stannous chloride, tin octanoate, and monobutyl tin oxide; and acids such as p-toluene sulfonic acid may be cited.

In this invention, the polyamine compound (I) preferably has -COOZ' (wherein Z' stands for a hydrocarbon group of 1 - 3 carbon atoms) introduced therein as the side chain (3) at a proportion of not more than 2.4 per one side chain (1) , in addition to the side chain (1) or the side chains (1) and (2). In the present specification, the compound having the side chains (1) and (3) and optionally the side chain (2) will be referred to briefly as "side chains (1,3)-containing polyamine compound". The introduction of the side chain (3) in this specific amount results in inducing the adsorption of the polyamine compound to the cement particles and impartation of hydrophobic nature to the surface of the hardened hydraulic product and consequently lowering the tensile stress between the hardened hydraulic product and the water and further exalting the drying shrinkage reducing effect. Further, the introduction of the side chain (3) results in further exalting the dispersibility/fluidity caused by the side chain (1) . The side chains (1,3)-containing polyamine compound according to this invention may be formed by introducing a single kind of side chain (3) into the polyamine compound (I) or may be formed by introducing two or more kinds of not less than two kinds of side chain (3) into the polyamine compound (I).

In this invention, the introduction of the side chain (3) does not need to be particularly restricted but may be accomplished by any of the known methods. The side chains (1,3)-containing polyamine compound according to this invention can be generally produced by causing the side chain (1)-containing polyamine compound or the side chains (1,2)-containing polyamine compound produced as described above to react with a compound represented by the following formula (3):

[Chemical 4]

$$X^2 - Y' \qquad (3)$$

(the compound of the formula (3) is referred to as "compound (IV)" hereinafter). Otherwise, the side chains (1,3)-containing polyamine compound having the side chains (1) and (3) may be produced by first causing the polyamine compound (I) to react with the compound (IV) of the formula (3) and subsequently causing the resultant product to react with the compound (II) of the formula (2). The side chains (1,3)-containing polyamine compound which is obtained as described above, owing to the introduction of the carboxylic acid group in the specific amount, can induce the impartation of hydrophobic nature to the surface of hardened cement product during the adsorption of the compound to the cement surface, and consequently manifest the effect of reducing the tensile stress between the hardened cement product and the water and allow further reduction of the drying shrinkage.

In the side chains (1,3) -containing polyamine compound according to this invention, the side chain (3) is preferably introduced at a proportion of not more than 2.4 per one side chain (1). This is because if more than 2.4 of the side chains (3) are introduced into the polyamine compound (I), the overage would possibly result in proportionately reducing the amount of the side chain (1) to be introduced, suffering the group originating in the carboxylic acid to be

introduced into the polyamine compound (I) in an excess amount, entailing the excessive addition to the dispersibility of the produced side chains (1,3)-containing polyamine compound; obstructing the additionn of the amount necessary for reducing the drying shrinkage, and eventually lowering the drying shrinkage-reducing property excessively. In consideration of the drying shrinkage-reducing effect of the side chains (1,3)-containing polyamine compound and further the dispersibility/fluidity thereof, the number of the side chain (3) to be introduced into the polyamine compound (I) is preferably in the range of 0.10 - 2.00, more preferably in the range of 0.15 - 1.75, and most preferably in the range of 0.20 - 1.50, per one piece of the side chain (1).

Further, in the formula (3) which represents the compound (IV) , $X^2$ is as defined for the substituent "$X^2$" of the formula (2). Thus, the description of this definition will be omitted herein. Then, Y' stands for -COOZ' , wherein Z' stands for a hydrocarbon group of 1 - 3 carbon atoms. As typical examples of the hydrocarbon group of 1 - 3 carbon atoms, linear and branched alkyl groups such as methyl, ethyl, propyl, and isopropyl; and cyclic alkyl groups such as cyclopropyl may be cited. Among other hydrocarbon groups cited above, linear alkyl groups such as methyl, ethyl, and propyl prove favorable and methyl and ethyl prove particularly favorable.

As typical examples of the compound (IV), methyl (meth)acrylate, ethyl (meth)acrylate, and propyl (meth) acrylate may be cited. These compounds (IV) may be used either singly or in the form of a mixture of two or more members. Among other compounds (IV) cited above, methyl (meth) acrylate and ethyl (meth)acrylate prove particularly favorable.

Then, the amount of the compound (IV) to be used in this invention may be so set as to exist in the prescribed amount relative to the side chain (1). It does not need to be particularly restricted but is only required to be sufficient for reacting with the polyamine compound (I) , the side chain (1)-containing polyamine compound, or the side chains (1,2)-containing polyamine compound and forming the side chains (1,3)-containing polyamine compound in a sufficient amount. In consideration of the reactivity with the compound mentioned above, the amount of the compound (IV) to be used is preferably in the range of 0.01 - 0.90 mol, more preferably in the range of 0.05 - 0.80 mol, and most preferably in the range of 0 . 05 - 0. 70 mol, based on one active amine hydrogen of the polyamine compound (I).

In this invention, the side chain-containing polyamine compound according to this invention can be obtained by reacting the polyamine compound (I) and the compound (II) with the oxyalkylene and/or the compound (III), and/or the compound (IV). In the present specification, the side chain (1)-containing polyamine compound, the side chains (1, 2) -containing polyamine compound, and the side chains (1, 3)-cntaining polyamine compound will be collectively referred to as "sid chain-containing polyamine compound". In this case, the order in which the polyamine compound (I), the compound (II) of the formula (1), the oxyalkylene and/or the compound (III), and/or the compound (IV) are added does not need to be particularly restricted but is only required to enable the polyamine compound (I) , the compound (II) , the oxyalkylene and/or the compound (III) and/or the compound (IV) to react and give rise to the target side chain-containing polyamine compound. For example, a procedure which comprises simultaneously adding the polyamine compound (I), the compound (II), the oxyalkylene and/or the compound (III), and/or the compound (IV) and al lowing them to react ; a procedure which comprises first reacting the compound (II) with the polyamine compound (I) and subsequently allowing the resultant product to react with the oxyalkylene and/or the compound (III); a procedure which comprises reacting the compound (II) with the polyamine compound (I) and subsequently allowing the resultant product to react with the compound (IV); a procedure which comprises reacting the polyamine compound (I) to react with the oxyalkylene and/or the compound (III) and subsequently adding the compound (II) to the resultant product and allowing them to react; a procedure which comprises reacting the polyamine compound (I) with the compound (IV), and subsequently adding the compound (II) to the resultant product and allowing them to react; a the procedure which comprises adding the compound (II), and the compound (IV) to the polyamine compound (I) and allowing them to react are available for the production aimed at. Among other procedures cited above, a procedure which comprises simultaneously adding the polyamine compound (I), the compound (II), the oxyalkylene and/or the compound (III) and allowing them to react; a procedure which comprises simultaneously adding the polyamine compound (I), the compound (II),the oxyalkylene and/or the compound (III) and/or the compound (IV) and allowing them to react; a procedure which comprises reacting the polyamine compound (I) with the compound (II) and subsequently allowing the resultant product to react with the oxyalkylene and/or the compound (III); a procedure which comprises reacting the polyamine compound (I) with the compound (II) and subsequently allowing the resultant product to react with the oxyalkylene and/or the compound (IV); a procedure which comprises reacting the polyamine compound (I) with the compound (IV), subsequently adding the compound (II) to the resultant product and allowing them to react; and a procedure which comprises reacting the polyamine compound (I) with the oxyalkylene and/or the compound (III), subsequently adding the compound (II) to the resultant product and allowing them to react are used particularly favorably.

Then, the conditions for the reaction of the polyamine compound (I)/side chain (1)-containing polyamine compound/side chains (1,2)-containing polyamine compound with the compound (IV) do not need to be particularly restricted but are only required to promote the reaction and allow the side chain (2) to be introduced in a sufficient amount into the polyamine compound (I). For example, the conditions similar to the conditions of the reaction of the polyamine compound (I)/side chain (1)-containing polyamine compound with the compound (III) are usable favorably.

The kind of the side chain-containing polyamine compound obtained as described above does not need to be particularly restricted but is only required to be formed in consequence of the reaction described above. Specifically, the side chain-containing polyamine compounds according to this invention include polyethylene imine/epoxyhexane, polyethylene imine/epoxyhexane/butyl (meth)acrylate, polyethylene imine/epoxyhexane/2-ethylhexyl (meth)acrylate, polyethylene imine/epoxyhexane/lauryl (meth)acrylate, polyethylene imine/epoxyhexane/2-hydroxyethyl (meth)acrylate, polyethylene imine/epoxyhexane/butyl (meth)acrylate/2-hydroxyethyl (meth)acrylate,polyethylene imine/epoxyhexane/ 2-ethylhexyl (meth)acrylate/2-hydroxyethyl(meth)acrylate,polyethylene imine/epoxyhexane/lauryl (meth)acrylate/2-hydroxyethyl (meth)acrylate, polyethylene imine/epoxyhexane/butyl (meth)acrylate/(meth)acrylic acid, polyethylene imine/ epoxyhexane/2-ethylhexyl (meth)acrylate/(meth)acrylic acid, and polyethylene imine/epoxyhexane/lauryl (meth)acrylate/(meth)acrylic acid; polyethylene imine/α-olefin epoxide which is a mixtures of 12 - 14 carbon atoms, polyethylene imine/α-olefin epoxide which is a mixtures of 12 - 14 carbon atoms/butyl (meth) acrylate, polyethylene imine/α-olefin epoxide which is a mixtures of 12 - 14 carbon atoms/2-ethylhexyl (meth)acrylate, polyethylene imine/α-olefin epoxide which is a mixtures of 12 - 14 carbon atoms/lauryl (meth)acrylate, polyethylene imine/α-olefin epoxide which is a mixtures of 12 - 14 carbon atoms/2-hydroxyethyl (meth)acrylate, polyethylene imine/α-olefin epoxide which is a mixtures of 12 - 14 carbon atoms/butyl (meth)acrylate/2-hydroxyethyl (meth)acrylate, polyethylene imine/α-olefin epoxide which is a mixtures of 12 - 14 carbon atoms/2-ethylhexyl (meth)acrylate/2-hydroxyethyl (meth)acrylate,polyethylene imine/α-olefin epoxide which is a mixtures of 12 - 14 carbon atoms/lauryl(meth)acrylate/2-hydroxyethyl(meth)acrylate, polyethylene imine/α-olefin epoxide which is a mixtures of 12 - 14 carbon atoms/butyl (meth) acrylate/ (meth) acrylic acid, polyethylene imine/α-olefin epoxide which is a mixtures of 12 - 14 carbon atoms/2-ethylhexyl (meth)acrylate/(meth)acrylic acid, polyethylene imine/α-olefin epoxide which is a mixtures of 12 - 14 carbon atoms/lauryl (meth)acrylate/(meth)acrylic acid, polyethylene imine/α-olefin epoxide which is a mixtures of 16 - 18 carbon atoms, polyethylene imine/α-olefin epoxide which is a mixtures of 16 - 18 carbon atoms/butyl (meth) acrylate, polyethylene imine/α-olefin epoxide which is a mixtures of 16 - 18 carbon atoms/2-ethylhexyl (meth)acrylate, polyethylene imine/α-olefin epoxide which is a mixtures of 16 - 18 carbon atoms/lauryl (meth)acrylate, polyethylene imine/α-olefin epoxide which is a mixtures of 16 - 18 carbon atoms/2-hydroxyethyl (meth)acrylate, polyethylene imine/α-olefin epoxide which is a mixtures of 16 - 18 carbon atoms/butyl (meth)acrylate/2-hydroxyethyl (meth)acrylate, polyethylene imine/α-olefin epoxide which is a mixtures of 16 - 18 carbon atoms/2-ethylhexyl (meth)acrylate/2-hydroxyethyl (meth)acrylate,polyethylene imine/α-olefin epoxide which is a mixtures of 16 - 18 carbon atoms/lauryl (meth)acrylate/2-hydroxyethyl(meth)acrylate, polyethylene imine/α-olefin epoxide which is a mixtures of 16-18 carbon atoms/butyl (meth)acrylate/(meth) acrylic acid, polyethylene imine/α-olefin epoxide which is a mixtures of 16 - 18 carbon atoms/2-ethylhexyl (meth)acrylate/(meth)acrylic acid, polyethylene imine/α-olefin epoxide which is a mixtures of 16 - 18 carbon atoms/lauryl (meth)acrylate/(meth)acrylic acid, polyethylene imine/α-olefin epoxide/ (meth) acrylates such as polyethylene imine/α-olefin epoxide which is a mixtures of 12 - 14 carbon atoms/ methoxy (poly)ethylene oxide (meth)acrylate, polyethylene imine/α-olefin epoxide which is a mixtures of 16 - 18 carbon atoms/methoxy (poly) ethylene oxide (meth)acrylate, polyethylene imine/α-olefin epoxide which is a mixtures of 12 - 14 carbon atoms/methoxy(poly)ethylene oxide (poly)propylene oxide (meth)acrylate, polyethylene imine/α-olefin epoxide which is a mixtures of 16- 18 carbon atoms/methoxy (poly) ethylene oxide (poly)propylene oxide (meth)acrylate, polyethylene imine/alkyl (meth)acrylate/(meth)acrylic acids such as polyethylene imine/butyl (meth) acrylate/(meth) acrylic acid, polyethylene imine/pentyl (meth)acrylate/(meth)acrylic acid, polyethylene imine/hexyl (meth)acreylate/(meth) acrylic acid, polyethylene imine/cyclohexyl (meth)acrylate/(meth)acrylic acid, polyethylene imine/2-ethylhexyl (meth)acrylate/ (meth)acrylic acid, polyethylene imine/dodecyl (meth)acrylate/(meth)acrylic acid, polyethylene imine/myristyl (meth)acrylate/(meth)acrylic acid, and polyethylene imine/stearyl (meth)acrylate/(meth)acrylic acid; polyethylene imine/alkyl (meth)acrylate/(meth)acrylates such as polyethylene imine/butyl (meth)acrylate/2-hydroxyethyl (meth)acrylate, polyethylene imine/pentyl(meth)acrylate/2-hydroxyethyl(meth)acrylate, polyethylene imine/hexyl (meth)acrylate/2-hydroxyethyl (meth)acrylate, polyethylene imine/cyclohexyl (meth)acrylate/2-hydroxyethyl (meth)acrylate, polyethylene imine/2-ethylhexyl (meth)acrylate/2-hydroxyethyl (meth)acrylate, polyethylene imine/dodecyl (meth)acrylate/2-hydroxyethyl (meth) acrylate, polyethylene imine/myristyl (meth)acrylate/2-hydroxyethyl (meth)acrylate, polyethylene imine/stearyl (meth) acrylate/2-hydroxyethyl (meth)acrylate, polyethylene imine/butyl (meth)acrylate/methoxy(poly)ethylene oxide (meth)acrylate, polyethylene imine/pentyl (meth)acrylate/methoxy (poly) ethylene oxide (meth)acrylate, polyethylene imine/hexyl (meth)acrylate/methoxy (poly)ethylene oxide (meth)acrylate, polyethylene imine/cyclohexyl (meth)acrylate/methoxy (poly)ethylene oxide (meth)acrylate, polyethylene imine/2-ethylhexyl (meth)acrylate/methoxy (poly)ethylene oxide (meth) acrylate, polyethylene imine/dodecyl (meth)acrylate/methoxy (poly) ethylene oxide (meth)acrylate, polyethylene imine/ myristil (meth)-acrylate/methoxy (poly)ethylene oxide (meth)acrylate, polyethylene imine/stearyl (meth)acrylate/methoxy (poly) ethylene oxide (meth) acrylate, polyethylene imine/butyl (meth)acrylate/methoxy (poly)ethylene oxide (poly)propylene oxide (meth)acrylate, polethylene imine/pentyl (meth)acrylate/methoxy (poly)ethylene oxide (poly)propylene oxide (meth)acrylate, polyethylene imine/hexyl(meth)acrylate/methoxy (poly) ethylene oxide (poly)propylene oxide (meth) acrylate, polyethylene imine/cyclohexyl (meth)acrylate/methoxy (poly)ethylene oxide (poly)propylene oxide (meth)acrylate, polyethylene imine/2-ethylhexyl (meth)acrylate/methoxy (poly)ethylene oxide (poly) propylene oxide (meth)acrylate, polyethylene imine/dodecyl (meth)acrylate/methoxy (poly) ethylene oxide (poly)propylene oxide (meth)acrylae,

polyethylene imine/myristil (meth)acrylate/methoxy (poly)ethylene oxide (poly)propylene oxide (meth)acrylate, and polyethylene imine/stearyl (meth)acrylate/methoxy (poly)ethylene oxide (poly)propylene oxide (meth)acrylate, for example. Besides the typical examples cited above, the products resulting from substituting ethylene oxide adducts of polyethylene imine (such as, for example, ethylene oxide adducts of polyethylene imine/α-olefin epoxide which is a mixture of 12 to 14 carbon atoms/(meth)acrylic acid) and ethylene oxide and propylene oxide adducts of polyethylene imine (such as, for example, ethylene oxide and propylene oxide adducts of polyethylene imine/α-olefin epoxide which is a mixture of 12 to 14 carbon atoms/(meth)acrylic acid) instead of polyethylene imine are also included within the side chain-containing polyamine compounds according to this invention.

The additive for a hydraulic material of according to this invention may be advantageously used for a hydraulic material. This is because the side chain-containing polyamine compound forming the additive for a hydraulic material of this invention, by the presence of the hydrophobic group, can lower the surface tension of water, and by the introduction of a carboxylic acid, can induce the impartation of hydrophobic nature to the surface of cement when it is adsorbed to the cement surface, reduce the tensile stress between the hardened cement product and the water, and also by these effects, can reduce the drying shrinkage efficiently, function as a surfactant, permit the hydraulic material composition to entrain air of good quality, and by the function like a ball bearing, can impart fine dispersibility/fluidity to the hydraulic material composition.

The additive for a hydraulic material of this invention may comprise only one member selected from the class consisting of the side chain (1)-containing polyamine compounds, the side chains (1,2)-containing polyamine compounds, and the side chain (1, 3)-containing polyamine compounds; may comprise not less than two members selected from the class consisting of the side chain (1)-containing polyamine compounds, the side chains (1,2)-containing polyamine compounds, and the side chain (1, 3)-containing polyamine compounds; or may comprise a suitable combination of one or more side chain (1)-containing polyamine compounds, one or more side chains (1,2)-containing polyamine compounds, and one or more s ide chains (1,3)-containing polyamine compounds.

By combining the additive for a hydraulic material of this invention with a dispersing agent, the dispersibility of cement particles can be additionally improved. The second aspect of this invention, therefore, relates to an additive composition for a hydraulic material which contains at least one additive for a hydraulic material of this invention and a dispersing agent. In this invention, the additives of the invention for a hydraulic material may be used either singly or in the form of a mixture of two or more members.

The dispersing agent which can be used in this invention does not need to be particularly restricted. Any of the known dispersing agents may be used. To be specific, the known dispersing agents include copolymers of alkenyl ether type monomers resulting from adding ethylene oxide to such specific unsaturated alcohol as 3-methyl-3-buten-1-ol, unsaturated carboxylic acid type monomers, and monomers copolymerizable with these monomers, or the salts thereof, as disclosed in JP-A SHO 62-68806, various sulfonic acid type dispersing agents having a sulfonic group in the molecular unit thereof, and various polycarboxylic acid type dispersing agents having a polyoxyalkylene chain and a carboxyl group in the molecular unit thereof, for example. As typical examples of the sulfonic acid type dispersing agent, lignin sulfonates; polyol derivatives; naphthalene sulfonic acid formalin condensates; melamine sulfonic acid formalin condensates; polystyrene sulfonates; and aminosulfonic acid type dispersing agents such as aminoaryl sulfonic acid-phenol formaldehyde condensates (see JP-A HEI 1-113419) may be cited. As typical examples of the polycarboxylic acid type dispersing agent, dispersing agents for cement comprising a copolymer of a polyalkylene glycol mono(meth)acrylic ester type compound and a (meth) acrylic acid type compound and/or a salt thereof as the (a) component, a copolymer of a polyalkylene glycol mono(meth)allyl ether type compound and maleic anhydride and/or the hydrolysate thereof and/or the salt thereof as the (b) component, and a copolymer of a polyalkylene glycol mono(meth)allyl ether type compound and a maleic ester of a polyalkylene glycol type compound and/or the salt as the (c) component (see JP-A HEI 7-267705); concrete admixtures comprising a copolymer of polyalkylene glycol ester of (meth)acrylic acid and (meth)acrylic acid (salt) as the A component, a specific polyethylene glycol polypropylene glycol type compound as the B. component, and a specific surfactant as the C component (see Japanese Patent No. 2508113); copolymers comprising polyethylene (propylene) glycol ester or polyethylene (propylene) glycol mono(meth)allyl ether of (meth)acrylic acid, (meth)allyl sulfonic acid (salt), and (meth) acrylic acid (salt) (see JP-A SHO 62-216950); copolymers comprising polyethylene (propylene) glycol ester of (meth) acrylic acid, (meth) allyl sulfonic acid (salt), and (meth) acrylic acid (salt) (see JP-A HEI 1-226757); copolymers comprising polyethylene (propylene) glycol ester of (meth) acrylic acid, (meth) allyl sulfonic acid (salt) orp-(meth) allyloxybenzene sulfonic acid (salt), and (meth)acrylic acid (salt) (see JP-B HEI 5-36377); copolymers of polyethylene glycol mono (meth) allyl ether and maleic acid (salt) (see JPA HEI 4-149056); copolymers comprising polyethylene glycol ester of (meth) acrylic acid, (meth) allylsulfonic acid (salt), (meth) acrylic acid (salt), alkane diol mono(meth) acrylate, polyalkylene glycol mono(meth)acrylate, and α,β-unsaturated monomer having an amide group in its molecular unit (see JP-A HEI 5-170501); copolymers comprising polyethylene glycol mono(meth)allyl ether, polyethylene glycolmono(meth)acrylate, an alkyl ester of (meth) acrylic acid, (meth) acrylic acid (salt), and (meth) allyl sulfonic acid (salt) or p-(meth)allyloxybenzene sulfonic acid (salt) (see JP-A HEI 6-191918); copolymers comprising alkoxypolyalkylene glycol monoallyl- ether and maleic anhydride or the hydrolysate or the salt thereof (see JP-A HEI 5-43288); copolymers

comprising polyethylene glycol monoallyl ether, maleic acid, and a monomer copolymerizable with such monomers or the salt thereof or the ester thereof (see JP-B SHO 58-38380); copolymers comprising polyalkylene glycol mono(meth) acrylic ester type monomer, (meth)acrylic acid type monomer, and monomer copolymerizable with such monomers (see JP-B SHO 59-18338); copolymers comprising (meth)acrylic acid ester having a sulfonic acid group and optionally a monomer copolymerizable therewith or the salts thereof (see JP-A SHO 62-119147); products by the esterification of copolymers of alkoxypolyalkylene glycol monoallyl ether and maleic anhydride and polyoxyalkylene derivative having an alkenyl group at the terminal thereof (see JP-A HEI 6-271347); products by the esterification of copolymers of alkoxypolyalkylene glycol monoallyl ether and maleic anhydride and polyoxyalkylene derivatives having a hydroxyl group at the terminal thereof (see JP-AHEI 6-298555) ; copolymers comprising polyalkylene glycol monoester type monomers with at least one monomer selected among (meth)acrylic acid type monomers, unsaturated dicarboxylic acid type monomers, and (meth)allyl sulfonic acid type monomers (see JP-A HEI 7-223852); and polycarboxylic acid type copolymers produced by copolymerizing monomer components containing a monomer having an oxyalkylene group and an unsaturated carboxylic acid type monomer by the use of a thiol type chain transfer agent having a hydrocarbon group of 3 or more carbon atoms (see JP-A 2003-138738) may be cited.

As the polycarboxylic acid type dispersing agents, polycarboxylic acid type dispersing agents (A) which comprises a structural unit (V-a) represented by the following formula (4):

[Chemical 5]

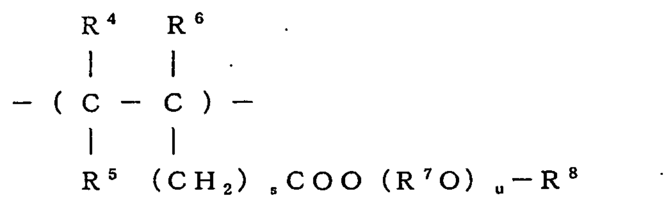

(4)

wherein $R^4$, $R^5$, and $R^6$ independently stand for a hydrogen atom or a methyl group; s is an integer of 0 -2; $R^7O$ stands for one or a mixture of two or more oxyalkylene groups of 2 - 18 carbon atoms; u stands for an average addition mol number of oxyalkylene groups ($R^7O$) and is in the range of 1 - 300; and $R^9$ stands for a hydrogen atom or a hydrocarbon group of 1 - 30 carbon atoms,
and a structural unit (VI) represented by the following formula (6) :

[Chemical 6]

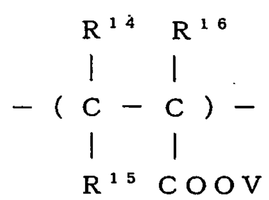

(6)

wherein $R^{14}$, $R^{15}$, and $R^{16}$ independently stand for a hydrogen atom, a methyl group, or a - $(CH_2)_qCOOV'$ group, wherein V' stands for a hydrogen atom, an univalent metal, a divalent metal, an ammonium group, or an organic amine group, q is an integer of 0 - 2; and V stands for a hydrogen atom, an univalent metal, a divalent metal, ammonium group, or an organic amine group, if COOV' and COOV are present in the total number of not less than 2, two of them may form an anhydride,
as essential structural units, polycarboxylic acid type dispersing agents (B) containing a structural unit (V-b) represented by the following formula (5):

[Chemical 7]

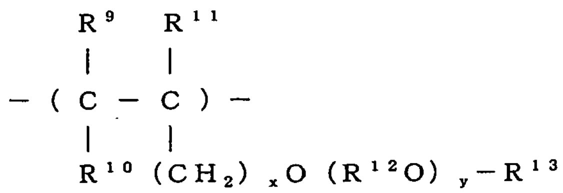

(5)

wherein $R^9$, $R^{10}$, and $R^{11}$ independently stand for a hydrogen atom or a methyl group; x is an integer of 0 - 2; $R^{12}O$ stands for one or a mixture of two or more oxyalkylene groups of 2 - 18 carbon atoms; y stands for an average addition mol number of oxyalkylene groups ($R^{12}O$) and is in the range of 1 - 300; and $R^{13}$ stands for a hydrogen atom or a hydrocarbon group of 1 - 30 carbon atoms, and a structural unit (VI) represented by the formula (6) as essential structural units, and hydrophilic graft polymers resulting from graft-polymerizing an unsaturated carboxylic acid type monomer to a polyether compound as disclosed in JP-A HEI 7-54645, JP-A HEI 8-208769, and JP-A HEI 8-208770 can be advantageously used. Among other polycarboxylic acid type dispersing agents cited above, the polycarboxylic acid type dispersing agents (A) and the polycarboxylic acid type dispersing agents (B) are used preferably. The polycarboxylic acid type dispersing agents (A) and the polycarboxylic acid type dispersing agents (B) may be used either singly or in the form of a combination of two or more members, respectively.

The polycarboxylic acid type dispersing agent (A) is a polymer comprising, as essential structural units, the structural unit (V-a) represented by the formula (4) and the structural unit (VI). It may further comprise another structural unit derived from other copolymerizable monomer(e). Each of these structural units in the polycarboxylic acid type dispersing agent (A) may comprise one single species or two or more species.

The proportion of the structural unit (V-a) and structural unit (VI) (structural unit (V-a) /structural unit (VI); % by mass) in the above polycarboxylic acid type dispersing agent (A) is preferably 1 to 99/99 to 1. The total content (% by mass) of the structural unit (V-a) and structural unit (VI) in the polycarboxylic acid type dispersing agent (A) is preferably 50 to 100% by mass, more preferably 70 to 100% by mass, based on the total mass of the polycarboxylic acid type dispersing agent (A).

The polycarboxylic acid type dispersing agent (B) is a polymer comprising, as essential structural units, the structural unit (V-b) represented by the formula (5) and the structural unit (VI). It may further comprise another structural unit derived from other copolymerizable monomer(e). These structural units in the polycarboxylic acid type dispersing agent (B) each may comprise one single species or two or more species.

In the polycarboxylic acid type dispersing agent (B), each the structural unit (V-b) and the structural unit (VI) preferably accounts for at least 1% by mass of all structural units, and the proportion of the structural unit (V-b) is preferably not more than 50 mol % of all the structural units. If the proportion of the structural unit (V-b) is less than 1% by mass, the content of the oxyalkylene group(s) of the unsaturated (poly)alkylene glycol ether monomer contained in the polycarboxylic acid type dispersing agent (B) would be unduly low. On the other hand, if the proportion of the structural unit (VI) is less than 1% by mass, the content of the carboxyl groups of the unsaturated monocarboxylic acid monomer contained in the polycarboxylic acid type dispersing agent (B) would be unduly low. In either case, the dispersing ability of the produced polycarboxylic acid type dispersing agent (B) would tend to decrease. Further, since the unsaturated (poly)alkylene glycol ether monomer has low polymerizability, it is preferred that the proportion of the structural unit (V-b) be not more than 50 mol % of all the structural units so that the polycarboxylic acid type dispersing agent (B) can be obtained with excellent dispersibility in a high yield. The total proportion (% by mass) of the structural units (V-b) and (VI) in the polycarboxylic acid type dispersing agent (B) may be preferably 50 to 100% by mass, more preferably 70 to 100% by mass, based on the total mss of the polycarboxylic acid type dispersing agent (B).

Alternatively, a commercially available cement dispersing agent can be used. As typical examples of the commercial product, Pozzolith No. 70 (lignin sulfonic acid compound polyol complex type dispersing agent, made by Pozzolith Bussan K.K.), and FC-900 (polycarboxylic acid type dispersing agent, made by Nippon Shokubai Co. Ltd.) may be cited. The known cement dispersing agents mentioned above may be used either singly or in the form of a mixture of two or more members.

In this invention, the mass ratio of the additive for a hydraulic material and the dispersing agent to be formulated does not need to be particularly restricted but is only required to attain drying shrinkage reducing effects and dispersibility aimed at. Though the mass ratio varies with the kinds of the additive for a hydraulic material and the cement dispersing agent and the conditions for formulating and testing the components, it is preferably in the range of 0.5 : 99.5 - 99.5 : 0.5, more preferably in the range of 5 : 95 - 95 : 5, particularly preferably in the range of 10 : 90 - 95 : 5, and most

preferably in the range of 20 : 80 - 95 : 5. In this case, if the ratio of the additive for a hydraulic material exceeds 95 mass% of the whole composition, the overage would possibly result in preventing the effect by the dispersing agent from being manifested fully satisfactorily, lowering the fluidity, and adversely affecting the operational efficiency. Conversely, if the ratio of the additive for a hydraulic material falls short of 5 mass% of the whole composition, the shortage wouldpossibly result in preventing the drying shrinkage of the hydraulic material, particulalry concrete member from being reduced sufficiently because of an unduly small supply of the additive for the hydraulic material.

The additive for a hydraulic material of this invention may be used in the form of an aqueous solution, or in the form of a powder prepared by neutralizing it with the hydroxide of a divalent metal such as calcium or magnesium to give a polyvalent metal salt thereof and drying the salt, or by depositing the polymer or salt on an inorganic powder such as a fine silica based powder and drying the deposited product.

The additive for a hydraulic material of this invention can be used in various hydraulic materials, namely in cement and other hydraulic materials then cement, for example gypsum. Preferred examples of the hydraulic composition comprising a hydraulic material, water and the additive for a hydraulic material of this invention, and optionally a fine aggregate (e.g. sand) or a coarse aggregate (e.g. crushed stone) may be cement paste, mortar, concrete and plaster.

Among the additive compositions for a hydraulic material cited above, additive compositions for a hydraulic material in which cement is used as the hydraulic material are in commonest use. Such a composition comprises the additive for a hydraulic material of this invention, cement and water as essential constituents. Such an additive composition is also involved in the scope of this invention.

As the cement which can be used in the additive composition of this invention, portland cements (ordinary, high-early-strength, ultra high-early-strength, moderate heat, sulfate resistant, and low alkali grades thereof), various blended cements (blast furnace slag cement, silica cement, fly ash cement), white portland cement, calcium-aluminate cement, ultra rapid hardening cement (one clinker ultra rapid hardening cement, two clinker ultra rapid hardening cement, magnesium phosphate cement), grouting cement, oil-well cement, lower calorific value cement (lower calorific value blast furnace slag cement, fly ash-mixed lower calorific value blast furnace slag cement, high belite cement) , ultrahigh strength cement, cement-based hardening materials, and economical cement (cement produced by using at least one of municipal refuse incineproportionn ash and sewage sludge incineproportionn ash as a material) can be advantageously used. Fine powders such as blast furnace slag, fly ash, cinder ash, clinker ash, husk ash, silica fume, silica powder and limestone powder, and gypsum may further be added. As the aggregate, gravel, crushed stone, water granulated blast furnace slag, recycled concrete aggregate and, further, fireproof aggregates such as silica stone-based, clay-based, zircon-based, high alumina, silicon carbide-based, graphite-based, chrome-based, chrome-magnesite, and magnesia-based ones can be used.

As for the unit water amount, the amount of cement used and the water/cement ratio, in each cubic meter of the additive composition of this invention, the unit water amount is preferably set to a level in the range of 100 to 185 $kg/m^3$; the amount of cement used is preferably set to a level in the range of 250 to 800 $kg/m^3$, and the water/cement ratio (mass ratio) is preferably set to a level in the range of 0.1 to 0.7. More preferably, the unit water amount is in the range of 120 to 175 $kg/m^3$, the amount of cement used is in the range of 270 to 800 $kg/m^3$, and the water/cement ratio (mass ratio) is in the range of 0.2 to 0.65. In the ranges as mentioned above, the additive composition of this invention can be used in such a wide range as from poor to rich mixtures, and also can be applied both to high strength concrete with a high unit cement amount and to poor concrete with a unit cement amount of not more than 300 $kg/m^3$.

The amount of the additive for a hydraulic material of this invention formulated in the additive composition of this invention is preferably in the range of 0.001 to 20.0% by mass based on the mass of cement when it is used in mortar or concrete, for instance, in which hydraulic cement is used. If the amount is lower than 0.001% by mass, the obtained additive composition would manifest unduly low shrinkage reducing ability. Conversely, when it exceeds 20.0% by mass, the curing time of hydraulicmaterials would be easily extended. The amount of the additive for a hydraulic material to be formulated is more preferably in the range of 0.001 to 10.0% by mass, still more preferably 0.05 to 5.0% by mass, most preferably 0.01 to 3.0% by mass.

The additive composition of this invention is effective in ready mixed concrete, concrete for secondary concrete products (precast concrete), centrifugal molded concrete, vibrating compacted concrete, steam cured concrete, concrete for spraying and the like and, further, it is effective also in mortar and concrete species required to have high flowability, such as medium flowing concrete (concrete showing a slump value of 22 to 25 cm) , high flowing concrete (concrete showing a slump value of not less than 25 cm and a slump flow value of 50 to 70 cm), self-filling concrete and self-leveling materials.

The additive composition of this invention may further comprise one or more of other known cement additives (ingredients) such as listed below under (1) to (20):

(1) Water-soluble polymeric substances: unsaturated carboxylic acid polymers such as polyacrylic acid (sodium salt), polymethacrylic acid (sodium salt), polymaleic acid (sodium salt), and acrylic acid-maleic acid copolymer sodium salt; nonionic cellulose ethers such as methylcellulose, ethylcellulose, hydroxymethylcellulose, hydroxyethylcellulose, carboxymethylcellulose, carboxyethylcellulose and hydroxypropylcellulose; polysaccharide derivatives having a part or all hydrogen atoms of hydroxyl group(s) in an alkylated or hydroxyalkylated derivative of polysaccharide, such as methylcellulose, ethylcellulose, hydroxyethylcellulose and hydroxypropylcellulose substituted with a hydrophobic substituent comprising a hydrocarbon chain of 8 to 40 carbon atoms as a partial structure and an ionic hydrophilic substituent containing a sulfonic acid group or the salt thereof as a partial structure; polysaccharides produced by microbial fermentation such as yeast glucans, xanthan gum, β-1,3-glucans (linear or branched, e.g. curdlan, paramylon, pachyman, scleroglucan, rhamnalan) and the like; polyacrylamide; polyvinyl alcohol; starch; starch phosphoric acid ester; sodium alginate; gelatin; amino-containing acrylic acid copolymers and quaternary products thereof.

(2) Polymer emulsions: copolymers of various vinyl monomer such as alkyl (meth)acrylates.

(3) Retardants: oxycarboxylic acids such as gluconic acid, glucoheptonic acid, arabonic acid, malic acid, citric acid, and inorganic or organic salts thereof such as sodium, potassium, calcium, magnesium, ammonium and triethanolamine salts; monosaccharides such as glucose, fructose, galactose, saccharose, xylose, apiose, ribose and invert sugar, oligosaccharides such as disaccharides and trisaccharides, such oligosaccharides as dextrin, polysaccharides such as dextran, and other saccharides such as molasses containing these saccharides; sugar alcohols such as sorbitol; magnesium silicofluoride; phosphoric acid and salts thereof, or borate esters; aminocarboxylic acids and salts thereof; alkali-soluble proteins; humic acid; tannic acid; phenols; polyhydric alcohols such as glycerol; phosphonic acids and derivatives thereof, such as aminotri(methylenephosphonic acid), 1-hydroxyethylidene-1,1-diphosphonic acid, ethylenediaminetetra(methylenephosphonic acid), diethylenetriaminepenta(methylenephosphonic acid), and alkali metal or alkaline earth metal salts thereof, etc.

(4) Early strengthening agents/accelerators: soluble calcium salts such as calcium chloride, calcium nitrite, calcium nitrate, calcium bromide and calcium iodide; chlorides such as iron chloride and magnesium chloride; sulfate salts; potassium hydroxide; sodium hydroxide; carbonate salts; thiosulfate salts; formic acid and formate salts such as calcium formate; alkanolamines; calcium-aluminate cement; calcium aluminosilicate, etc.

(5) Mineral oil-based antifoaming agents: kerosene, liquid paraffin, etc.

(6) Fat- or oil-based antifoaming agents: animal or vegetable oils, sesame oil, castor oil, and the alkylene oxide adducts thereof, etc.

(7) Fatty acid-based antifoaming agents: oleic acid, stearic acid, and the alkylene oxide adducts thereof, etc.

(8) Fatty acid ester-based antifoaming agents: glycerol monoricinolate, alkenylsuccinic acid derivatives, sorbitol monolaurate, sorbitol trioleate, natural waxes, etc.

(9) Oxyalkylene type antifoaming agents:polyoxyalkylenes such as (poly)oxyethylene(poly)oxypropylene adducts; (poly) oxyalkyl ethers such as diethylene glycol heptyl ether, polyoxyethylene oleyl ether, polyoxypropylene butyl ether, polyoxyethylenepolyoxypropylene 2-ethylhexyl ether, and higher ($C_{12}$-$C_{14}$) alcohol-oxyethyleneoxypropylene adducts; (poly)oxyalkylene (alkyl)aryl ethers such as polyoxypropylene phenyl ether and polyoxyethylene nonylphenyl ether; acetylene ethers produced by addition polymerization of an alkylene oxide onto an acetylene alcohol such as 2,4,7,9-tetramethyl-5-decyne-4,7-diol, 2,5-dimethyl-3-hexyne-2,5-diol or 3-methyl-1-butyn-3-ol; (poly) oxyalkylene fatty acid esters such as diethylene glycol oleate, diethylene glycol laurate and ethylene glycol distearate; (poly) oxyalkylenesorbitan fatty acid esters such as polyoxyethylenesorbitan monolaurate and polyoxyethylenesorbitan trioleate; (poly)oxyalkylene alkyl(aryl) ether sulfate ester salts such as polyoxypropylene methyl ether sulfate sodium salt and polyoxyethylene dodecylphenyl ether sulfate sodium salt; (poly)oxyalkylene alkylphosphate esters such as polyoxyethylene stearylphosphate; (poly)oxyalkylenealkylamines such as polyoxyethylenelaurylamine; polyoxyalkyleneamides, etc.

(10) Alcohol-based antifoaming agents: octyl alcohol, hexadecylalcohol, 2-Ethylhexyl alcohol, acetylene alcohols, glycols, etc.

(11) Amide-based antifoaming agents: acrylate polyamines, etc.

(12) Phosphate ester-based antifoaming agents: tributyl phosphate, sodium octylphosphate, etc.

(13) Metal salt-based antifoaming agents: aluminum stearate, calcium oleate, etc.

(14) Silicone-based antifoaming agents: diemthylsilicone oil, silicone paste, silicone emulsions, organic group-modified polysiloxanes (organosiloxanes such as dimethylpolysiloxane), fluorosilicone oils, etc.

(15) Air-entraining (AE) agents: resin soaps, saturated or unsaturated fatty acids, sodium hydroxystearate, lauryl sulfate, ABSs (alkylbenzenesulfonates), LASs (linear alkylbenzenesulfonates), alkanesulfonates, polyoxyethylene alkyl(phenyl) ethers, polyoxyethylene alkyl(phenyl) ether sulfate esters or salts thereof, polyoxyethylene alkyl(phenyl) ether phosphate esters or salts thereof, proteinic materials, alkenylsulfosuccinates, α-olefinsulfonates, etc.

(16) Other surfactants: polyalkylene oxide derivatives derived from aliphatic monohydric alcohols of 6 to 30 carbon atoms within the molecule, such as octadecyl alcohol and stearyl alcohol, alicyclic monohydric alcohols of 6 to 30 carbon atoms within the molecule, such as abietyl alcohol, monofunctional mercaptans of 6 to 30 carbon atoms within the molecule, such as dodecylmercaptan, alkylphenols of 6 to 30 carbon atoms within the molecule, such as nonylphenol, amines of 6 to 30 carbon atoms within the molecule, such as dodecylamine, or carboxylic acids of 6

to 30 carbon atoms within the molecule, such as lauric acid and stearic acid, by addition of not less than 10 moles of an alkylene oxide (s) such as ethylene oxide and/or propylene oxide; alkyldiphenyl ether sulfonic acid salts in which two sulfo-containing phenyl groups, which may optionally have an alkyl group or alkoxy group as a substituent, is bonded via ether bonding; various anionic surfactants; various cationic surfactants such as alkylamine acetates and alkyltrimethylammonium chlorides; various nonionic surfactants; various amphoteric surfactants, etc.

(17) Waterproofing agents: fatty acids (salts), fatty acid esters, fats and oils, silicones, paraffins, asphalt, waxes, etc.

(18) Rust preventives: nitrite salts, phosphate salts, zinc oxide, etc.

(19) Cracking reducing agents: polyoxyalkyl ethers etc.

(20) Expansive admixtures: ettringite type, coal-derived type, etc.

As other conventional cement additives (ingredients) , cement wetting agents, thickening agents, sepaproportionn reducing agents, flocculants, strength increasing agents, self-leveling agents, colorants, antifungal agents and the like can be used. These cement additives (ingredients) can be used in combination.

The following combinations 1) to 8) of constituents other than cement and water in the additive composition of this invention may be mentioned as particularly preferred embodiments:

1) Combination of (a) an additive for a hydraulic material of this invention and (b) an oxyalkylene type antifoaming agent as two essential constituents. The proportion of the (b) oxyalkylene type antifoaming agent is preferably in the range of 0.01 to 200% by mass relative to the (a) additive for a hydraulic material.

2) Combination of (a) an additive for a hydraulic material of this invention and (b) a ligninsulfonic acid (salts) as two essential constituents. The mixing proportion, by mass, between the (a) additive for a hydraulic material and the (b) ligninsulfonic acid (salts) is preferably in the range of 99.5/0.5 to 0.5/99.5, more preferably 98/2 to 20/80.

3) Combination of (a) an additive for a hydraulic material of this invention and (b) a polycarboxylic acid type dispersing agent as two essential constituents. The mixing proportion, by mass, between the (a) additive for a hydraulic material and the (b) polycarboxylic acid type dispersing agent is preferably in the range of 99.5/0.5 to 0.5/99.5, more preferably 98/2 to 20/80.

4) Combination of (a) an additive for a hydraulic material of this invention, (b) a ligninsulfonic acid (salts) and (c) an oxyalkylene type antifoaming agent as three essential constituents. The mixing proportion, by mass, between the (a) additive for a hydraulic material and the (b) ligninsulfonic acid (salts) is preferably in the range of 99.5/0.5 to 0.5/99.5, more preferably 98/2 to 20/80. And the proportion of the (c) oxyalkylene type antifoaming agent is preferably in the range of 0.01 to 200% by mass relative to the total mass of the (a) additive for a hydraulic material and the (b) ligninsulfonic acid (salts).

5) Combination of (a) an additive for a hydraulic material of this invention, (b) a polycarboxylic acid type dispersing agent and (3) an oxyalkylene type antifoaming agent as three essential constituents. The mixing proportion, by mass, between the (a) additive for a hydraulic material and the (b) polycarboxylic acid type dispersing agent is preferably in the range of 99.5/0.5 to 0.5/99.5, more preferably 98/2 to 20/80. And the proportion of the (c) oxyalkylene type antifoaming agent is preferably in the range of 0.01 to 200% by mass relative to the total mass of the (a) additive for a hydraulic material and thw (b) polycarboxylic acid type dispersing agent.

6) Combination of (a) an additive for a hydraulic material of this invention and (b) a material sepaproportionn reducing agent as two essential constituents. Usable as the material sepaproportionn reducing agent are various thickening agents such as nonionic cellulose ethers, and compounds containing, as partial structures, a hydrophobic substituent comprising a hydrocarbon chain of 4 to 30 carbon atoms and a polyoxyalkylene chain resulting from addition of 2 to 300 moles, on average, of an alkylene oxide (s) of 2 to 18 carbon atoms, among others. The mixing proportion, by mass, between the (a) additive for a hydraulic material and the (b) material sepaproportionn reducing agent is preferably in the range of 10/90 to 99.99/0.01, more preferably 50/50 to 99.9/0.1. An additive compositions containing this combination are suited for the use as high flowing concrete, self-filling concrete and self-leveling composition.

7) Combination of (a) an additive for a hydraulic material of this invention and (b) a retardant as two essential constituents. Usable as the retardant are hydroxycarboxylic acids such as gluconic acid (salts) and citric acid (salts), saccharides such as glucose, sugar alcohols such as sorbitol, and phosphonic acids such as aminotri(methylenephosphonic acid), among others. Among them, hydroxycarboxylic acids such as gluconic acid (salts) and citric acid (salts) are more preferably used. The mixing proportion, by mass, between the (a) additive for a hydraulic material and the (b) retardant is preferably 50/50 to 99.9/0.1, more preferably 70/30 to 99/1.

8) Combination of (a) an additive for a hydraulic material of this invention and (b) an accelerator as two essential constituents. Usable as the accelerator are soluble calcium salts such as calcium chloride, calcium nitrite and calcium nitrate, chlorides such as iron chloride and magnesium chloride, thiosulfate salts, formic acid, and formate salts such as calcium formate, among others. The mixing proportion, by mass, between the (a) additive for a hydraulic material and the (b) accelerator is preferably 10/90 to 99.9/0.1, more preferably 20/80 to 99/1.

Examples:

Now, this invention will be describedmore specifically below with reference to working examples. In the present specification, "%" will be referred to as "mass %" and "parts" to as "mass parts", unless otherwise specified.

Production Example 1

In a glass reaction vessel equipped with a thermometer, a stirrer, a dropping funnel, a nitrogen conducting tube, and a reflux condenser and having an inner volume of 300 ml, 27.9 parts of Epomin SP-006 (polyethylene imine having a molecular weight of 600 and made by Nippon Shokubai Co., Ltd.) was placed and stirred while the interior of the reaction vessel was displaced with nitrogen and heated under an atmosphere of nitrogen to 90°C. Next, 32.2 parts of α-olefin epoxide AOE X24 of 12 - 14 carbon atoms (made by Daicel Kagaku Kogyo K.K., hereinafter abbreviated as "AOE X24") was added dropwise thereto over two hours. After the dropwise addition was completed, the components in the reaction vessel were left aging at 90°C for 1.5 hours, then cooled to 45°C. Subsequently, 26.9 parts of 2-hydroxyethyl acrylate (made by Wako Junyaku K.K.) was added dropwise thereto over 0.5 hour. The components in the vessel were further left aging at 45°C for 0.5 hour and subsequently cooled to room temperature, diluted with 238.7 parts of deionized water, and neutralized with acetic acid. Consequently, a yellowish brown clear aqueous solution of polymer (1) was obtained.

Production Example 2

In a glass reaction vessel equipped with a thermometer, a stirrer, a dropping funnel, a nitrogen conducting tube, and a reflux condenser and having an inner volume of 300 ml, 37.3 parts of Epomin SP-006 was placed and stirred while the interior of the reaction vessel was displaced with nitrogen and heated under an atmosphere of nitrogen to 90°C. Next, 43.0 parts of AOE X24 was added dropwise thereto over two hours. After the dropwise addition was completed, the components in the reaction vessel were left aging at 90°C for 1.5 hours and then cooled to 45°C. Subsequently, 39.7 parts of butyl acrylate was added dropwise thereto over 0.5 hour. The components in the vessel were further left aging at 45°C for 1.0 hour and subsequently cooled to room temperature, diluted with 513. 9 parts of deionized water, and neutralized with acetic acid. Consequently, a yellowish brown clear aqueous solution of polymer (2) was obtained.

Production Example 3

In a glass reaction vessel equipped with a thermometer, a stirrer, a dropping funnel, a nitrogen conducting tube, and a reflux condenser and having an inner volume of 300 ml, 47.1 parts of Epomin SP-006 was placed and stirred while the interior of the reaction vessel was displaced with nitrogen and heated under an atmosphere of nitrogen to 90°C. Next, 27.5 parts of 1,2-epoxyhexane (made by Wako Junyaku K.K.) was added dropwise thereto over two hours. After the dropwise addition was completed, the components in the reaction vessel were left aging at 90°C for 1.5 hours and then cooled to 45°C. Subsequently, 45.5 parts of 2-hydroxyethyl acrylate was added dropwise thereto over 0. 5 hour. The components in the vessel were further left aging at 45°C for 1.0 hour and subsequently cooled to room temperature, diluted with 499.2 parts of deionized water, and neutralized with acetic acid. Consequently, an aqueous solution of polymer (3) was obtained. Production Example 4

In a glass reaction vessel equipped with a thermometer, a stirrer, a dropping funnel, a nitrogen conducting tube, and a reflux condenser and having an inner volume of 300 ml, 38.5 parts of Epomin SP-006 was placed and stirred while the interior of the reaction vessel was displaced with nitrogen and heated under an atmosphere of nitrogen to 90°C. Next, 44.3 parts of 1,2-epoxyhexane was added dropwise thereto over two hours. After the dropwise addition was completed, the components in the reaction vessel were left aging at 90°C for 1.5 hours and then cooled to 45°C. Subsequently, 37.2 parts of 2-hydroxyethyl acrylate was added dropwise thereto over 0.5 hour. The components in the vessel were further left aging at 45°C for 1. 0 hour and subsequently cooled to room temperature, diluted with 403.3 parts of deionized water, and neutralized with acetic acid. Consequently, an aqueous solution of polymer (4) was obtained.

Production Example 5

In a glass reaction vessel equipped with a thermometer, a stirrer, a dropping funnel, a nitrogen conducting tube, and a reflux condenser and having an inner volume of 300 ml, 27.9 parts of Epomin SP-006 was placed and stirred while the interior of the reaction vessel was displaced with nitrogen and heated under an atmosphere of nitrogen to 90°C. Next, 32.2 parts of AOE X24 was added dropwise thereto over two hours. After the dropwise addition was completed, the components in the reaction vessel were left aging at 90°C for 1. 5 hours and then cooled to room temperature. The components in the vessel were diluted with 486.2 parts of deionized water and neutralized with acetic acid. Consequently,

an aqueous solution of polymer (5) was obtained.

Production Example 6

In a glass reaction vessel equipped with a thermometer, a stirrer, a dropping funnel, a nitrogen conducting tube, and a reflux condenser and having an inner volume of 300 ml, 68.9 parts of Epomin SP-018 (polyethylene imine having a molecular weight of 1, 800, made by Nippon Shokubai Co., Ltd.) was placed and stirred while the interior of the reaction vessel was displaced with nitrogen and heated under an atmosphere of nitrogen to 90°C. Next, 26.5 parts of AOE X24 was added dropwise thereto over two hours. After the dropwise addition was completed, the components in the reaction vessel were left aging at 90°C for 1.5 hours and then cooled to 50°C. Subsequently, 24.5 parts of butyl acrylate was added dropwise thereto over 0.5 hour. The components in the vessel were further left aging at 50°C for 1. 0 hour and subsequently cooled to room temperature, diluted with 482.7 parts of deionized water, and neutralized with acetic acid. Consequently, an aqueous solution of polymer (6) was obtained.

Production Example 7

In a glass reaction vessel equipped with a thermometer, a stirrer, a dropping funnel, a nitrogen conducting tube, and a reflux condenser and having an inner volume of 300 ml, 77.4 parts of Epomin SP-018 was placed and stirred while the interior of the reaction vessel was displaced with nitrogen and heated under an atmosphere of nitrogen to 90°C. Next, 15.1 parts of 1, 2-epoxyhexane was added dropwise thereto over two hours. After the dropwise addition was completed, the components in the reaction vessel were left aging at 90°C for 1.5 hours and then cooled to 50°C. Subsequently, 27.5 parts of butyl acrylate was added dropwise thereto over 0.5 hour. The components in the vessel were further left aging at 50°C for 1.0 hour and subsequently cooled to room temperature, diluted with 417.2 parts of deionized water, and neutralized with acetic acid. Consequently, an aqueous solution of polymer (7) was obtained.

Production Example 8

In a glass reaction vessel equipped with a thermometer, a stirrer, a dropping funnel, a nitrogen conducting tube, and a reflux condenser and having an inner volume of 300 ml, 57.1 parts of Epomin SP-006 was placed and stirred while the interior of the reaction vessel was displaced with nitrogen and heated under an atmosphere of nitrogen to 90°C. Next, 22.0 parts of AOE X24 was added dropwise thereto over two hours. After the dropwise addition was completed, the components in the reaction vessel were left aging at 90°C for 1.5 hours and then cooled to 50°C. Subsequently, 40.9 parts of 2-ethylhexyl acrylate was added dropwise thereto over 0.5 hour. The components in the vessel were further left aging at 50°C for 1. 0 hour and subsequently cooled to room temperature, diluted with 1350.5 parts of deionized water, and neutralized with acetic acid. Consequently, an aqueous solution of polymer (8) was obtained.

Production Example 9

In a glass reaction vessel equipped with a thermometer, a stirrer, a dropping funnel, a nitrogen conducting tube, and a reflux condenser and having an inner volume of 300 ml, 32.5 parts of Epomin SP-006 was placed and stirred while the interior of the reaction vessel was displaced with nitrogen and heated under an atmosphere of nitrogen to 90°C. Next, 37.6 parts of AOE X24 was added dropwise thereto over two hours. After the dropwise addition was completed, the components in the reaction vessel were left aging at 90°C for 1.5 hours and then cooled to 50°C. Subsequently, 49.9 parts of 2-ethylhexyl acrylate was added dropwise thereto over 0.5 hour. The components in the vessel were further left aging at 50°C for 1. 0 hour and subsequently cooled to room temperature, diluted with 792.5 parts of deionized water, and neutralized with acetic acid. Consequently, an aqueous solution of polymer (9) was obtained.

Production Example 10

In a glass reaction vessel equipped with a thermometer, a stirrer, a dropping funnel, a nitrogen conducting tube, and a reflux condenser and having an inner volume of 300 ml, 38.6 parts of Epomin SP-006 was placed and stirred while the interior of the reaction vessel was displaced with nitrogen and heated under an atmosphere of nitrogen to 90°C. Next, 44.6 parts of AOE X24 was added dropwise thereto over two hours. After the dropwise addition was completed, the components in the reaction vessel were left aging at 90°C for 1.5 hours and then cooled to 50°C. Subsequently, 36.7 parts of 2-ethylhexyl acrylate was added dropwise thereto over 0.5 hour. The components in the vessel were further left aging at 50°C for 1. 0 hour and subsequently cooled to room temperature, diluted with 792.5 parts of deionized water, and neutralized with acetic acid. Consequently, an aqueous solution of polymer (10) was obtained.

Production Example 11

In a glass reaction vessel equipped with a thermometer, a stirrer, a dropping funnel, a nitrogen conducting tube, and a reflux condenser and having an inner volume of 300 ml, 31.3 parts of Epomin SP-006 was placed and stirred while the interior of the reaction vessel was displaced with nitrogen and heated under an atmosphere of nitrogen to 90°C. Next, 36.1 parts of AOE X24 was added dropwise thereto over two hours. After the dropwise addition was completed, the components in the reaction vessel were left aging at 90°C for 1.5 hours and then cooled to 50°C. Subsequently, 52.3 parts of lauryl acrylate was added dropwise thereto over 1.0 hour. The components in the vessel were further left aging at 50°C for 1.0 hour and subsequently cooled to room temperature, diluted with 3374.3 parts of deionized water, and neutralized with acetic acid. Consequently, an aqueous solution of polymer (11) was obtained.

Production Example 12

In a glass reaction vessel equipped with a thermometer, a stirrer, a dropping funnel, a nitrogen conducting tube, and a reflux condenser and having an inner volume of 300 ml, 38.5 parts of Epomin SP-006 was placed and stirred while the interior of the reaction vessel was displaced with nitrogen and heated under an atmosphere of nitrogen to 90°C. Next, 44.5 parts of AOE X24 was added dropwise thereto over two hours. After the dropwise addition was completed, the components in the reaction vessel were left aging at 90°C for 1.5 hours and then cooled to 50°C. Subsequently, 37.0 parts of lauryl acrylate was added dropwise thereto over 1.0 hour. The components in the vessel were further left aging at 50°C for 1.0 hour and subsequently cooled to room temperature, diluted with 1227.0 parts of deionized water, and neutralized with acetic acid. Consequently, an aqueous solution of polymer (12) was obtained.

Production Example 13

In a glass reaction vessel equipped with a thermometer, a stirrer, a dropping funnel, a nitrogen conducting tube, and a reflux condenser and having an inner volume of 300 ml, 43.0 parts of Epomin SP-018 was placed and stirred while the interior of the reaction vessel was displaced with nitrogen and heated under an atmosphere of nitrogen to 90°C. Next, 33.1 parts of AOE X24 was added dropwise thereto over two hours. After the dropwise addition was completed, the components in the reaction vessel were left aging at 90°C for 1.5 hours and then cooled to 50°C. Subsequently, 43.9 parts of 2-ethylhexyl acrylate was added dropwise thereto over 0.5 hour. The components in the vessel were further left aging at 50°C for 1. 0 hour and subsequently cooled to room temperature, diluted with 1265. 7 parts of deionized water, and neutralized with acetic acid. Consequently, an aqueous solution of polymer (13) was obtained.

Production Example 14

In a glass reaction vessel equipped with a thermometer, a stirrer, a dropping funnel, a nitrogen conducting tube, and a reflux condenser and having an inner volume of 300 ml, 37.8 parts of Epomin SP-018 was placed and stirred while the interior of the reaction vessel was displaced with nitrogen and heated under an atmosphere of nitrogen to 90°C. Next, 43.6 parts of AOE X24 was added dropwise thereto over two hours. After the dropwise addition was completed, the components in the reaction vessel were left aging at 90°C for 1.5 hours and then cooled to 50°C. Subsequently, 38.6 parts of 2-ethylhexyl acrylate was added dropwise thereto over 0.5 hour. The components in the vessel were further left aging at 50°C for 1. 0 hour and subsequently cooled to roomtemperature, diluted with 1234.4 parts of deionized water, and neutralized with acetic acid. Consequently, an aqueous solution of polymer (14) was obtained.

Production Example 15

In a glass reaction vessel equipped with a thermometer, a stirrer, a dropping funnel, a nitrogen conducting tube, and a reflux condenser and having an inner volume of 300 ml, 32.5 parts of Epomin SP-018 was placed and stirred while the interior of the reaction vessel was displaced with nitrogen and heated under an atmosphere of nitrogen to 90°C. Next, 37.6 parts of AOE X24 was added dropwise thereto over two hours. After the dropwise addition was completed, the components in the reaction vessel were left aging at 90°C for 1.5 hours and then cooled to 50°C. Subsequently, 49.9 parts of 2-ethylhexyl acrylate was added dropwise thereto over 0.5 hour. The components in the vessel were further left aging at 50°C for 1.0 hour and subsequently cooled to room temperature, diluted with 858.8 parts of deionized water, and neutralized with acetic acid. Consequently, an aqueous solution of polymer (15) was obtained.

Production Example 16

In a glass reaction vessel equipped with a thermometer, a stirrer, a dropping funnel, a nitrogen conducting

tube, and a reflux condenser and having an inner volume of 300 ml, 39.2 parts of Epomin SP-200 (polyethylene imine having a molecular weight of 10,000 and made by Nippon Shokubai Co., Ltd. ) , 15.7 parts of acrylic acid, and 219. 4 parts of deionized water were placed and left reacting in a stirred state at 40°C for 48.0 hours. The components in the reaction vessel were then heated to 90°C. In an atmosphere of nitrogen, 45.1 parts of AOE X24 was added dropwise thereto over two hours. After the dropwise addition was completed, the components in the reaction vessel were left aging at 90°C for 8.0 hours and then cooled to room temperature, and neutralized with acetic acid. Consequently, an aqueous solution of polymer (16) was obtained.

Production Example 17

In a glass reaction vessel equipped with a thermometer, a stirrer, a dropping funnel, a nitrogen conducting tube, and a reflux condenser and having an inner volume of 300 ml, 38.6 parts of Epomin SP-018 was placed and stirred while the interior of the reaction vessel was displaced with nitrogen and heated under an atmosphere of nitrogen to 90°C. Next, 45.5 parts of AOE X24 was added dropwise thereto over two hours. After the dropwise addition was completed, the components in the reaction vessel were left aging at 90°C for 1.5 hours and then cooled to 50°C. Subsequently, 45.9 parts of ethyl acrylate was added dropwise thereto over 0.5 hour. The components in the vessel were further left aging at 50°C for 1.0 hour and subsequently cooled to room temperature, diluted with 1188. 6 parts of deionized water, and neutralized with acetic acid. Consequently, an aqueous solution of polymer (17) was obtained.

Production Example 18

In a glass reaction vessel equipped with a thermometer, a stirrer, a dropping funnel, a nitrogen conducting tube, and a reflux condenser and having an inner volume of 300 ml, 52.8 parts of Epomin SP-018 was placed and stirred while the interior of the reaction vessel was displaced with nitrogen and heated under an atmosphere of nitrogen to 90°C. Next, 60.9 parts of AOE X24 was added dropwise thereto over two hours. After the dropwise addition was completed, the components in the reaction vessel were left aging at 90°C for 1.5 hours and then cooled to 50°C. Subsequently, 6.3 parts of methyl acrylate was added dropwise thereto over 0.5 hour. The components in the vessel were further left aging at 50°C for 1.0 hour and subsequently cooled to room temperature, diluted with 508.3 parts of deionized water, and neutralized with acetic acid. Consequently, an aqueous solution of polymer (18) was obtained.

Production Example 19

In a glass reaction vessel equipped with a thermometer, a stirrer, a dropping funnel, a nitrogen conducting tube, and a reflux condenser and having an inner volume of 300 ml, 32. 6 parts of Epomin SP-018 was placed and stirred while the interior of the reaction vessel was displaced with nitrogen and heated under an atmosphere of nitrogen to 90°C. Next, 71.8 parts of AOE X24 was added dropwise thereto over two hours. After the dropwise addition was completed, the components in the reaction vessel were left aging at 90°C for 1.5 hours and then cooled to 50°C. Subsequently, 15.6 parts of methyl acrylate was added dropwise thereto over 0.5 hour. The components in the vessel were further left aging at 50°C for 1.0 hour and subsequently cooled to room temperature, diluted with 1178 . 7 parts of deionized water, and neutralized with acetic acid. Consequently, an aqueous solution of polymer (19) was obtained.

Production Example 20

In a glass reaction vessel equipped with a thermometer, a stirrer, a dropping funnel, a nitrogen conducting tube, and a reflux condenser and having an inner volume of 300 ml, 230.3 parts of PAA-05 (an aqueous 20% solution of polyallyl amine having a molecular weight of 5,000 and made by Nitto Boseki K. K. ) , 14.0 parts of acrylic acid, and 73. 7 parts of deionized water and left reacting in a stirred state at 40°C for 48.0 hours. The components in the reaction vessel were then heaaated to 90°C. In an atmosphere of nitrogen, 40.0 parts of AOE X24 was added dropwise thereto over two hours. After the dropwise addition was completed, the components in the reaction vessel were left aging at 90°C for 8.0 hours and then cooled to room temperature and neutralized with acetic acid. Consequently, an aqueous solution of polymer (2) was obtained.

Production Example 21

In a glass reaction vessel equipped with a thermometer, a stirrer, a dropping funnel, a nitrogen conducting tube, and a reflux condenser and having an inner volume of 300 ml, 39.0 parts of Epomin SP-018 was placed and stirred while the interior of the reaction vessel was displaced with nitrogen and heated under an atmosphere of nitrogen to 90°C. Next, 34.4 parts of AOE X24 was added dropwise thereto over two hours. After the dropwise addition was completed,

the components in the reaction vessel were left aging at 90°C for 1.5 hours and then cooled to 50°C. Subsequently, 46.6 parts of methyl acrylate was added dropwise thereto over 0.5 hour. The components in the vessel were further left aging at 50°C for 1.0 hour and subsequently cooled to room temperature, diluted with 1158.1 parts of deionized water, and neutralized with acetic acid. Consequently, an aqueous solution of polymer (21) was obtained.

Production Example 22

In a glass reaction vessel equipped with a thermometer, a stirrer, a dropping funnel, a nitrogen conducting tube, and a reflux condenser and having an inner volume of 300 ml, 43.8 parts of Epomin SP-018 was placed and stirred while the interior of the reaction vessel was displaced with nitrogen and heated under an atmosphere of nitrogen to 90°C. Next, 41.3 parts of AOE X24 was added dropwise thereto over two hours. After the dropwise addition was completed, the components in the reaction vessel were left aging at 90°C for 1.5 hours and then cooled to 50°C. Subsequently, 44.9 parts of methyl acrylate was added dropwise thereto over 0.5 hour. The components in the vessel were further left aging at 50°C for 1.0 hour and subsequently cooled to room temperature, diluted with 1055.3 parts of deionized water, and neutralized with acetic acid. Consequently, an aqueous solution of polymer (22) was obtained.

Production Example 23: Synthesis of air-entraining and high-range water-reducing admixture (PC-1)

In a glass reaction vessel equipped with a thermometer, a stirrer, a dropping funnel, a nitrogen conducting tube, and a reflux condenser and having an inner volume of 5 liters, 1698 parts of deionized water was placed and stirred while the interior of the reaction vessel was displaced with nitrogen and heated under an atmosphere of nitrogen to 80°C. Next, an aqueous monomer mixture solution was prepared by mixing 1668 parts of methoxypolyethylene glycol monomethacrylate (average addition mol number of ethylene oxides of 25), 332 parts of methacrylic acid, and 500 parts of deoinized water and further mixing them homogeneously with 16.7 parts of 3-mercaptopropionic acid as a chain transfer agent. The resultant aqueous monomer mixture solution and 184 parts of an aqueous 10% ammonium persulfate solution were severally added dropwise thereto over four hours. After the completion of the dropwise addition, 46 parts of an aqueous 10% ammonium persulfate solution was added dropwise thereto over one hour. Subsequently, the components in the reaction vessel were continuously retained at 80°C for one hour to complete the reaction of polymerization. Thereafter, the reaction solution was neutralized to pH 7 by the use of an aqueous 30% sodium hydroxide solution at a temperature below the polymerization temperature. Consequently, a polycaaarboxylic acid type dispersing agent (PC-1) having a weight average molecular weight of 24,000 was obtained. Production Example 24: Synthesis of air-entraining and high-range water-reducing admixture (PC-2)

In a glass reaction vessel equipped with a thermometer, a stirrer, a dropping funnel, a nitrogen conducting tube, and a reflux condenser and having an inner volume of one liter, 3.1 parts of deionized water,66.9 parts of an aqueous 80% solution of polyalkylene glycol monoalkenyl ether monomer having 50 mols of ethylene oxide added to 3-methyl-3-buten-1-ol (hereinafter referred to as "IPN-50"), and 2.8 parts of an aqueous 30% solution of hydrogen peroxide were placed and heated in an atmosphere of nitrogen to 58°C. Next, a mixed solution consisting of 267.6 parts of an aqueous 80% solution of IPN-50, 34.7 parts of deionized water, and 2. 5 parts of lauryl mercaptan and a mixed solution consisting of 36.2 paarts of acrylic acid and 9.0 parts of deionized water were added dropwise over three hours and a mixed solution consisting of 1.1 parts of L-ascorbic acid and 19.9 parts of deionized water was simultaneously added dropwise over 3.5 hours. After the dropwise addition was completed, the components in the reaction vessel were left aging continuously at 58°C for 1.0 hour, then cooled to room temperature, and adjustedtopH 6. 7 with an aqueous 30% sodiumhydroxide solution. Consequently, a polycarboxylic acid type dispersing agent having a weight average molecular weight of 30,200 (PC-2) was obtained.

Examples 1 - 24

The polymers (1) - (22) produced by following the procedures of Production Examples 1-22 were examined for the mortar flow and the drying shrinkage-reducing effect. The results are shown in Table 2 below. The monomer compositions of the polymers (1) - (22) are shown in Table 1. In Table 1 given below, the amount of the compound (II) to be added is reported by the mol of the compound (II) based on one active amine hydrogen of the polyamine compound (I), and the amount of the compound (IV) to be introduced is reported by the mol ratio of the compound (IV) relative to the total amount of the compound (II).

1. Kneading of mortar

The kneading of mortar was carried out as follows. In a Hobart type mortar mixer, Model No. N-50 (made by Hobart Corp. ) , 213.7 g of a dilution prepared by weighing a prescribed amount of a polymer and diluting it with water,

485.8 g of ordinary portland cement made by Taiheiyo Cement K.K., and 1350 g of a standard sand for testing cement strength (specified in 5.1.3., Annex 2 to JIS {Japanese Industrial Standard} R 5201-1997) were mixed and kneaded into a mortar in accordance with JIS R 5201-1997. In Table 2, an amount of a polymer added is represented by "wt%" based on the weight of cement.

The air content of a given mortar was adjusted, when necessary, by selecting and using a defoamer so as to have the amount of air entrained by the mortar fall in the range of 5.0 - 10.0 vol%. The following defoamers were used for the adjustment of the air content inmortar, and the expressions "Defoamers A to D" are used in Table 2. Further, in Table 2, an amount of a defoamer added is represented by "wt%" based on the solid content of a polymer.

Defoamer A: Polyoxyalkylene glycol alkyl ether type
Defoamer B: Acetylene glycol type (Surfinol 420, made by Aeroproducts Corp.)
Defoamer C: Polyalkylene glycol type (Microair 404, made by Pozzolith Bussan K.K.)
Defoamer D: Alcohol type defoamer.

2. Determination of mortar flow

The mortar flow was determined in accordance with the method described in JIS R 5201-1997 with necessary modifications.

3. Determination of air content in mortar

The air content in a given mortar was determined by the use of a 500 ml measuring cylinder in accordance with JIS A 1174 (Method of test for unit weight and air content (gravimetric) of fresh polymer-modified mortar).

4. Evaluation of drying shrinkage reducing property

The kneading of mortar was carried out as follows. In a Hobart type mortar mixer, Model No. N-50 (made by Hobart Corp.), 213.7g of a dilution prepared by weighing a dispersing agent, a polymer, and a defoamer each in an amount shown in Tables 2 and 3 below and diluting it with water, 485.8 g of ordinary portland cement made by Taiheiyo Cement K.K., and 1350 g of a standard sand for testing cement strength (specified in 5.1.3., Annex 2 to JIS {Japanese Industrial Standard} R 5201-1997) were mixed and kneaded into a mortar in accordance with JIS R 5201-1997.

For controls, a sample having no polymer added thereto (Comparative Example 1) and a sample having Epomin SP-006 added thereto to a concentration of 0.20 mass% (Comparative Example 2) were used.

Next, a mortar test specimen (4 x 4 x 16 cm) for the examination of the drying shrinkage-reducing effect was prepared in accordance with JIS R 1129.

The retaining mold was coated in advance with silicone grease in order to obtain waterproofness and facilitate release therefrom. The test specimen had gauge plugs attached one each to the opposite ends thereof. The mortar resulting from the kneading was pored into the retaining mold. Then, the mold was placed in a container, sealed tightly therein and retained at 20°C to effect initial curing. Two days thereafter, the cured mortar was extracted from the retaining mold, the silicone grease adhering to the mold was removed by washing with a scrubbing brush and water, and subsequently the mortar was left aging in still water at 20°C for five days (underwater curing).

A dial gauge (made by Nishinippon Shikenki K.K.) was used in accordance with JIS A 1129. The test specimen cured in the still water for five days was wiped with paper towel to remove the water remaining on the surface thereof and immediately measured to determine the length thereof. The length found at this point was taken as a standard. Thereafter, the test specimen was stored in a thermo-hygrostat set at a temperature of 20°C and 60% of humidity for 28 days, during which period the length of the test specimen was measured at proper intervals. In this case, the drying shrinkage-reducing effect was reported as a value of the decrease in the shrinkage at the time of addition of the polymer relative to the amount of shrinkage determined in Comparative Example 1 in which no polymers were added, as shown in the following formula. This value increased in accordance as the decrease in the shrinkage grew. The value of not more than 10% was regarded that the shrinkage-reducing effect was absent.

[Formula 1]

Drying shrinkage-reducing effect (%)

= {[(Amount of shrinkage in Comparative Example 1) - (Amount of shrinkage of polymer)]/(Amount of shrinkage in Comparative Example 1)} x 100

[Table 1]

| Polymer | Polyamine compound (I) | Compound (II) | | Compound (III) | Compound (IV) | Added amount of compound (II) | Introduced amount of compound (IV) |
|---|---|---|---|---|---|---|---|
| Polymer 1 | PEI(600) | AOE X24 | - | HEA | - | 0.25 | - |
| Polymer 2 | PEI(600) | AOE X24 | BA | - | - | 0.61 | - |
| Polymer 3 | PEI(600) | 1,2-EpHx | - | HEA | - | 0.25 | - |
| Polymer 4 | PEI(600) | 1,2-EpHx | - | HEA | - | 0.49 | - |
| Polymer 5 | PEI(600) | AOE X24 | - | - | - | 0.25 | - |
| Polymer 6 | PEI(1,800) | AOE X24 | BA | - | - | 0.20 | - |
| Polymer 7 | PEI(1,800) | 1,2-EpHx | BA | - | - | 0.20 | - |
| Polymer 8 | PEI(600) | AOE X24 | 2-EtHxAA | - | - | 0.75 | - |
| Polymer 9 | PEI(600) | AOE X24 | 2-EtHxAA | - | - | 0.61 | - |
| Polymer 10 | PEI(600) | AOE X24 | 2-EtHxAA | - | - | 0.47 | - |
| Polymer 11 | PEI(600) | AOE X29 | LaAA | - | - | 0.61 | - |
| Polymer 12 | PEI(600) | AOE X24 | LaAA | - | - | 0.42 | - |
| Polymer 13 | PEI (1,800) | AOE X24 | 2-EtHxAA | - | - | 0.41 | - |
| Polymer 14 | PEI (1,800) | AOE X24 | 2-EtHxAA | - | - | 0.49 | - |
| Polymer 15 | PEI (1,800) | AOE X24 | 2-EtHxAA | - | - | 0.61 | - |
| Polymer 16 | PEI(10,000) | AOE X24 | - | AA | - | 0.24 | - |
| Polymer 17 | PEI(1,800) | AOE X24 | - | - | EA | 0.25 | 2.00 |
| Polymer 18 | PEI(1,800) | AOE X24 | - | - | AM | 0.25 | 0.24 |
| Polymer 19 | PEI(1,800) | AOE X24 | - | - | AM | 0.48 | 0.50 |
| Polymer 20 | PAA(5,000) | AOE X24 | - | AA | - | 0.25 | - |
| Polymer 21 | PEI(1,800) | AOE X24 | - | - | AM | 0.19 | 3.16 |

(continued)

| Polymer | Polyamine compound (I) | Compound (II) | | Compound (III) | Compound (IV) | Added amount of compound (II) | Introduced amount of compound (IV) |
|---|---|---|---|---|---|---|---|
| Polymer 22 | PEI(1,800) | AOE X24 | - | - | AM | 0.20 | 2.50 |

In the above Table 1,
Polyamine compound (I):
PEI: Polyethylene imine, the numeral in the parentheses indicates a molecular weight.
PAA: Polyallyl amine, the numeral in the parentheses indicates a molecular weight.
Compound (II):
1,2-EpHx: 1,2-epoxyhexane (C6) (reagent made by Wako Junyaku K.K.)
AOE X24: α-olefin epoxide (Mixture of 12 - 14 carbon atoms) (made by Daicel Kagaku K.K.)
BA: Butyl acrylate (C4) (reagent made by Wako Junyaku K.K.)
2-EtHxAA: 2-ethylhexyl acrylate (C8) (reagent of Wako Junyaku K.K.)
LaAA: Lauryl acrylate (C12) (reagent of Wako Junyaku K.K.)
Compound (III):
HEA: 2-hydroxyethyl acrylate
AA: Acrylic acid
Compound (IV):
AM: Methyl acrylate
EA: Ethyl acrylate

[Table 2-1]

| | Example 1 | Example 2 | Example 3 | Example 4 | Example 5 | Example 6 | Example 7 | Example 8 | Example 9 |
|---|---|---|---|---|---|---|---|---|---|
| | Polymer 1 | Polymer 2 | Polymer 3 | Polymer 4 | Polymer 5 | Polymer 6 | Polymer 7 | Polymer 8 | Polymer 9 |
| Polyamine compound (I) | PEI | PEI | PEI | PEI | PEI | PEI | PEI | PEI | PEI |
| Molecular weight | 600 | 600 | 600 | 600 | 600 | 1,800 | 1,800 | 600 | 600 |
| Compound (II-1) Type | AOE X24 | AOE X24 | AOE6 | AOE6 | AOE X24 | AOE X24 | AOE6 | AOE X24 | AOE X24 |
| Added amount | 0.25 | 0.25 | 0.25 | 0.49 | 0.25 | 0.08 | 0.08 | 0.25 | 0.25 |
| Compound (II-2) Type | | BA | | | | BA | BA | 2-EtHxAA | 2-EtHxAA |
| Added amount | | 0.36 | | | | 0.12 | 0.12 | 0.5 | 0.36 |
| Compound (III) Type | HEA | | HEA | HEA | | | | | |
| Added amount | 0.36 | | 0.36 | 0.36 | | | | | |
| Compound (IV) Type Added amount | | | | | | | | | |
| Composition (mass ratio) | | | | | | | | | |
| Polyamine compound (1) | 32.0% | 31.0% | 39.2% | 32.1% | 46.4% | 57.5% | 64.5% | 23.3% | 27.1% |
| Compound (II-1) | 37.0% | 35.9% | 22.9% | 36.9% | 53.6% | 22.1% | 12.5% | 26.9% | 31.3% |
| Compound (II-2) | | 33.1% | | | | 20.4% | 23.0% | 49.8% | 41.6% |
| Compound (III) | 31.0% | | 37.9% | 31.0% | | | | | |
| Compound (IV) | | | | | | | | | |
| Mortar composition | | | | | | | | | |
| Additive for hydraulic material | 0.20% | 0.20% | 0.20% | 0.20% | 0.20% | 0.20% | 0.20% | 0.20% | 0.20% |
| Defoamer (Type) (Added amount) | Defoamer A 50.0% | Defoamer A 20.0% | Defoamer A 30.0% | Defoamer B 80.0% | Defoamer B 60.0% | Defoamer A 10.0% | Defoamer A 7.0% | | |
| Mortar property | | | | | | | | | |
| Flow (mm) | 145.0 | 152.5 | 158.5 | 152.0 | 154.5 | 158.0 | 167.0 | 152.0 | 156.0 |
| Air content (vol%) | 10.0% | 5.5% | 8.5% | 5.0% | 8.5% | 7.0% | 5.0% | 6.6% | 6.8% |
| Drying shrinkage-reducing property (drying period: 28 days) | | | | | | | | | |
| Strain of shrinkage (x $10^{-6}$) | 496 | 488 | 546 | 455 | 392 | 499 | 517 | 460 | 409 |
| Shrinkage-reducing ratio | 23.2% | 24.4% | 15.3% | 29.5% | 39.2% | 22.7% | 19.9% | 28.7% | 36.6% |

[Table 2-2]

| | | Example 10 | Example 11 | Example 12 | Example 13 | Example 14 | Example 15 | Example 16 | Example 17 | Example 18 |
|---|---|---|---|---|---|---|---|---|---|---|
| | | Polymer 10 | | Polymer 11 | Polymer 12 | Polymer 13 | Polymer 14 | | Polymer 15 | Polymer 16 |
| Polyamine compound (I) | | PEI | | PEI | PEI | PEI | PEI | | PEI | PEI |
| | Molecular weight | 600 | | 600 | 600 | 1,800 | 1,800 | | 1,800 | 10,000 |
| Compound (II-1) | Type | AOE X24 | | AOE X24 | AOE X24 | AOE X24 | AOE X24 | | AOE X24 | AOE X24 |
| | Added amount | 0.25 | | 0.25 | 0.25 | 0.17 | 0.25 | | 0.25 | 0.25 |
| Compound (II-2) | Type | 2-EtHxAA | | LaAA | LaAA | 2-EtHxAA | 2-EtHxAA | | 2-EtHxAA | |
| | Added amount | 0.22 | | 0.36 | 0.17 | 0.24 | 0.24 | | 0.36 | |
| Compound (III) | Type | | | | | | | | | AA |
| | Added amount | | | | | | | | | 0.24 |
| Compound (IV) | Type | | | | | | | | | |
| | Added amount | | | | | | | | | |
| Composition (mass ratio) | | | | | | | | | | |
| | Polyamine compound (1) | 32.2% | | 24.1% | 32.1% | 35.8% | 31.5% | | 27.1% | 39.2% |
| | Compound (II-1) | 37.2% | | 27.8% | 37.1% | 27.6% | 36.4% | | 31.3% | 45.1% |
| | Compound (II-2) | 30.6% | | 48.1% | 30.8% | 36.6% | 32.1% | | 41.6% | |
| | Compound (III) | | | | | | | | | 15.7% |
| | Compound (IV) | | | | | | | | | |
| Mortar composition | | | | | | | | | | |
| | Additive for hydraulic material | 0.20% | 0.50% | 0.20% | 0.20% | 0,20% | 0.20% | 0.60% | 0.20% | 0.20% |
| | Defoamer (Type) | Defoamer C | Defoamer C | Defoamer A | Defoamer A/B | Defoamer A | Defoamer A | Defoamer A | | |
| | (Added amount) | 10.0% | 10.0% | 45.0% | 75/50 | 30.0% | 30.0% | 30.0% | | |
| Mortar property | | | | | | | | | | |
| | Flow (mm) | 133.5 | | 152.0 | 147.5 | 138.0 | 141.0 | | 155.0 | 167.0 |

(continued)

| | Example 10 | Example 11 | Example 12 | Example 13 | Example 14 | Example 15 | Example 16 | Example 17 | Example 18 |
|---|---|---|---|---|---|---|---|---|---|
| | Polymer 10 | | Polymer 11 | Polymer 12 | Polymer 13 | Polymer 14 | | Polymer 15 | Polymer 16 |
| Air content (vol%) | 7.6% | 7.3% | 6.4% | 7.8% | 8.3% | 8.0% | 7.6% | 5.9% | 5.1% |
| Drying shrinkage-reducing property (drying period: 28 days) | | | | | | | | | |
| Strain of shrinkage (x $10^{-6}$) | 437 | 350 | 433 | 388 | 456 | 435 | 331 | 441 | 501 |
| Shrinkage-reducing ratio | 32.3% | 45.7% | 32.9% | 39.8% | 29.3% | 32.6% | 48.7% | 31.7% | 22.5% |

[Table 2-3]

| | | Example 19 | Example 20 | Example 21 | Example 22 | Example 23 | Example 24 | Control 1 | Control 2 |
|---|---|---|---|---|---|---|---|---|---|
| | | Polymer 17 | Polymer 18 | Polymer 19 | Polymer 20 | Polymer 21 | Polymer 22 | | |
| Polyamine compound (I) | | PEI | PEI | PEI | PAA | PEI | PEI | | PEI |
| | Molecular weight | 1,800 | 1,800 | 1,800 | 5,000 | 1,800 | 1,800 | | 600 |
| Compound (II-1) | Type | AOE X24 | AOE X24 | AOE X24 | AOE X24 | AOE X24 | AOE X24 | | |
| | Added amount | 0.25 | 0.25 | 0.48 | 0.25 | 0.19 | 0.20 | | |
| Compound (II-2) | Type | | | | | | | | |
| | Added amount | | | | | | | | |
| Compound (III) | Type | | | | AA | | | | |
| | Added amount | | | | 0.24 | | | | |
| Compound (IV) | Type | AE | AM | AM | | AM | AM | | |
| | Added amount | 0.50 | 0.06 | 0.24 | | 0.60 | 0.50 | | |
| Composition (mass ratio) | | | | | | | | | |
| | Polyamine compound (I) | 29.7% | 44.0% | 27.2% | 46.1% | 32,5% | 33.7% | | 100.0% |
| | Compound (II-1) | 35.0% | 50.8% | 59.8% | 40.0% | 28.6% | 31.8% | | |
| | Compound (II-2) | | | | | | | | |
| | Compound (III) | | | | 14.0% | | | | |
| | Compound (IV) | 35.3% | 5.3% | 13.0% | | 38.9% | 34.5% | | |
| Mortar composition | | | | | | | | | |
| | Additive for hydraulic material | 0.20% | 0.20% | 0.20% | 0.20% | 0.20% | 0.20% | - | 0.20% |
| | Defoamer (Type) | Defoamer A | Defoamer A | Defoamer A | Defoamer A | Defoamer A | Defoamer A | | |
| | (Added amount) | 60.0% | 30.0% | 60.0% | 10.0% | 60.0% | 30.0% | | |
| Mortar property | | | | | | | | | |
| | Flow (mm) | 172.5 | 175.0 | 155.0 | 150.5 | 171.5 | 161.5 | 153.5 | 144.0 |
| | Air content (vol%) | 6.5% | 6.2% | 8.0% | 5.3% | 7.3% | 9.8% | 5.9% | 8.6 |
| Drying shrinkage-reducing property (drying period: 28 days) | | | | | | | | | |
| | Strain of shrinkage (x $10^{-6}$) | 491 | 499 | 425 | 513 | 516 | 491 | 646 | 557 |
| | Shrinkage-reducing ratio | 24.0% | 22.8% | 34.2% | 20.6% | 20.1% | 24.0% | 0.0% | 13.8% |

From the results shown in Table 2, it is noted that the polymers (1) - (22) according to this invention show significantly higher drying shrinkage-reducing property as compared with the single use of SP-006 (Comparative Example 2). Since the polymers (3) and (7) significantly exalted the mortar flow in spite of a slightly poor drying shrinkage-reducing effect as compared with the other polymers, these polymers could impart good dispersibility/fluidity to a hydraulic material composition. When theses polymers (3) and (7) are used for a hydraulic material composition, therefore, they can be expected to ensure satisfactory dispersibility/fluidity in spite of a decrease in the amount of the dispersing agent which is generally used in combination with a polymer.

Examples 25 and 26, Comparative Example 3

In these examples, the drying shrinkage-reducing agent was used in combination with a dispersing agent for the purpose of imparting dispersibility as generally practiced. In these examples, therefore, the experiment using mortar was carried out by following the actual procedure of use for the purpose of evaluating the drying shrinkage-reducing property and the dispersibility/fluidity. The polymers (9) and (11) were used in combination with a polycarboxylic acid type air-entraining and high-range water-reducing admixture (PC-2) produced by following the procedure of Production Example 24 so as to give the mortar flow in the range of 170 ± 10 mm and the resultant mixtures were examined for the drying shrinkage-reducing property. The method for kneading mortar and the method for determining the mortar flow and the air content were carried out in the same manner as in Examples 1 - 24. The drying shrinkage-reducing property was determined in the same manner as in Examples 1 - 24. For control in this case, a sample having PC-2 alone incorporated in a proportion of 0.055 mass% was used. The results are shown in Table 3.

[Table 3]

| | Example 25 | Example 26 | Control 3 |
|---|---|---|---|
| Mortar composition | | | |
| Dispersing agent (PC-2) | 0.550% | 0.050% | 0.055% |
| Drying shrinkage-reducing agent (Type) | Polymer 9 | Polymer 11 | - |
| Drying shrinkage-reducing agent (Amount added) | 0.20% | 0.20% | |
| Defoamer (Type) | | Defoamer B | |
| (Amount added) | | 55.0% | |
| Mortar properties | | | |
| Flow (mm) | 171.0 | 169.5 | 170.5 |
| Air content (vol%) | 6.3% | 6.4% | 6.1% |
| Drying shrinkage-reducing property (drying period: 28 days) | | | |
| Strain of shrinkage (x 10-6) | 418 | 423 | 471 |
| Shrinkage-reducing ratio | 11.3% | 10.2% | - |
| Note) Mortar composition<br>Cement (C): Normal portland cement (made by Taiheiyo Cement K.K.)<br>Sand (S): ISO standard sand (Cement Association)<br>C: 485.8 g, W + agent: 213.7 g, S: 1350.0 g<br>W/C = 44%, S/C = 2.78<br>Amount of a polymer and a dispersant added: These amounts are represented by "wt%" based on the weight of cement<br>Amount of a defoamer added: This amount is represented by "wt%" based on the solid content of a polymer | | | |

It is clear from the results shown in Table 3 that by the combination of the polymers of this invention with the polycarboxylic acid type air-entraining and high-range water-reducing admixtures, the polymers can impart an exalted drying shrinkage-reducing effect and the AE water-reducing agents can impart exalted dispersibility/fluidity to the mortar, respectively, and they can bring about satisfactory combination of drying shrinkage-reducing effect and dispersibility/ fluidity.

Examples 27 - 29, Comparative Examples 4 and 5: Method for evaluation of concrete

In these examples, the experiments were performed as follows by the use of concrete for the same purpose as described in Examples 25 and 26, namely with the object of evaluating the drying shrinkage-reducing property and the dispersibility/fluidity obtainable in the actual use. In a biaxially forced mixer, the following concrete compositions which were severally formed of the component materials weighed out in amounts calculated to give a total volume of 40 L were kneaded. The cement used herein was formed by equally mixing the products of normal portland cement (specific gravity of 3.16) from Taiheiyo Cement K.K., Sumitomo-Osaka Cement K.K., and Ube-Mitsubishi Cement Corp. In this case, the sand produced in Kimitsu (specific gravity of 2.65 and fineness modulus of 2.75) was used as fine aggregate and the crushed lime stone produced in Hachinohe (specific gravity of 2.69 and fineness modulus of 6.65) was used as coarse aggregate. The concrete was adjusted to a flow value of 28 ± 2 cm and an air content of 3.5 ± 1.0% by the use of a air-entraining and high-range water-reducing admixture and a defoamer. The air-entraining and high-range water-reducing admixtures and the defoamers used herein were as follows.

Air-entraining and high-range water-reducing admixture PC-1 (polycarboxylic acid type, synthesized by following the procedure of Production Example 23)

Air-entraining and high-range water-reducing admixture PC-2 (polycarboxylic acid type, synthesized by following the procedure of Production Example 24)

<Concrete composition>

Unit amount of cement: 320.0 kg/$m^3$
Unit amount of water: 164.0 kg/m3
Unit amount of fine aggregate: 877.3 kg/m3
Unit amount of coarse aggregate: 964.8 kg/m3
(Water-cement ratio (W/C) : 51.3%, fine aggregate ratio (s/a) : 48.0%)

<Kneading of materials>

The mixer charged with the fine aggregate, the cement, and the coarse aggregate was operated for dry mixing them for 10 seconds and then stopped. The resultant dry mixture and the water containing the polymer, the defoamer, and the air-entraining and high-range water-reducing admixture were joined and kneaded for 90 seconds. The concrete consequently formed was removed from the mixer and evaluated.

<Evaluation of fresh concrete>

The fresh concrete obtained as described above was tested for the value of slump and the air content by the following methods.
Slump value: JIS A 1101-1998
Air content: JIS A 1128-1998

<Evaluation of drying shrinkage-reducing property>

The produced fresh concrete was placed in a test specimen retaining frame fitted with gauge pins and measuring 10 x 10 x 40 cm, initially cured at 20°C for one day, released from the mold, further cured in still water at 20°C for six days, and put to the evaluation of the drying shrinkage-reducing property.

The drying shrinkage-reducing property was evaluated in accordance with JIS A 1129-3 (Method of test for length change of mortar and concrete, Part 3: Method with dial gauge) with necessary modifications.

For controls in this case, the samples prepared by adding PC-1 to a given cement in a proportion of 0.135 mass% and PC-2 to a given cement in a proportion of 0.175 mass% were used.

The results are shown in Table 4 below.

[Table 4]

| | Example 27 | Example 28 | Example 29 | Control 4 | Control 5 |
|---|---|---|---|---|---|
| **Composition** | | | | | |
| Dispersing agent (Type) (Added amount) | PC-1 0.125% | PC-1 0.155% | PC-2 0.145% | PC-1 0.135% | PC-2 0.175% |
| Drying shrinkage-reducing agent (Type) (Added amount) | Polymer 10 0.20% | Polymer 14 1.00% | Polymer 14 0.50% | - | - |
| Defoamer (Type) (Added amount) | Defoamer D 20.0% | Defoamer D 18.0% | Defoamer D 30.0% | | |
| **Concrete properties** | | | | | |
| Slump (cm) | 17.5 | 13.0 | 17.0 | 18.5 | 17.0 |
| Flow (cm) | 30.0 | 26.0 | 29.0 | 30.0 | 29.0 |
| Air content (vol%) | 3.1% | 2.7% | 2.6% | 2.6% | 4.6% |
| **Drying shrinkage-reducing property (drying period: 28 days)** | | | | | |
| Strain of shrinkage (x 10-6) | 237 | 99 | 151 | 289 | 250 |

Note) Concrete composition

| | Unit amount (kg/m3) | | | | W/C | s/a |
|---|---|---|---|---|---|---|
| | C | W | G | S | | |
| Plain | 320.0 | 200.0 | 919.6 | 905.9 | 62.5% | 50.0% |
| 18% reduction of water | 320.0 | 164.0 | 964.8 | 877.3 | 51.3% | 48.0% |

C (cement): Mixture of three kinds of cement

G (coarse aggregate): Crushed lime stone produced in Hachinohe

S (fine aggregate): Land sand produced in Kimitsu

Amount of a polymer and a dispersant added: These amounts are represented by "wt%" based on the weight of cement

Amount of a defoamer added: This amount is represented by "wt%" based on the solid content of a polymer

It is clear from the results shown in Table 4 that by the combination of the polymers of this invention with the polycarboxylic acid type air-entraining and high-range water-reducing admixtures, the polymers can impart an exalted drying shrinkage-reducing effect and the AE water-reducing agents are enabled to impart exalted dispersibility/fluidity to the concrete, respectively, and they can bring about satisfactory combination of drying shrinkage-reducing effect and dispersibility/fluidity.

## Claims

1. A drying shrinkage reducing-additive for a hydraulic material which comprises a polyamine compound having a hydrocarbon group of 4 - 30 carbon atoms as a side chain (1) as an essential component.

2. An additive for a hydraulic material according to claim 1, wherein said polyamine compound further comprises as a side chain (2) at least one group selected from the class consisting of oxyalkylene groups of 2 - 4 carbon atoms; -COOZ (wherein Z stands for a hydrogen atom, an univalent metal, a divalent metal, an ammonium group, an organic amine group, or a $-(R^2O)_n-R^3$, wherein $R^2O$ stands for one member or a mixture of two or more members selected from oxyalkylene groups of 2 - 18 carbon atoms, n stands for an average addition mol number of oxyalkylene groups ($R^2O$) and is in the range of 1 - 500, and $R^3$ stands for a hydrogen atom or a hydrocarbon group of 1 - 3 carbon atoms); and - $SO_3W$ (wherein W stands for a hydrogen atom, an univalent metal, a divalent metal, an ammonium group, or an organic amine group).

3. An additive for a hydraulic material according to claim 2, wherein said side chain (2) is -COOZ (wherein Z stands for a hydrogen atom, an univalent metal, a divalent metal, an ammonium group, an organic amine group, or a $-(R^2O)_n-R^3$, wherein $R^2O$ stands for one member or a mixture of two or more members selected from oxyalkylene groups of 2 - 18 carbon atoms, n stands for an average addition mol number of oxyalkylene groups ($R^2O$) and is in the range of 1 - 500, and $R^3$ stands for a hydrogen atom or a hydrocarbon group of 1 - 3 carbon atoms).

4. An additive for a hydraulic material according to any one of claims 1 - 3, wherein said polyamine compound further comprises -COOZ' (wherein Z' stands for a hydrocarbon group of 1 - 3 carbon atoms) as a side chain (3).

5. An additive for a hydraulic material according to claim 4, wherein said side chain (3) is present at a ratio of not more than 2.4 per one side chain (1).

6. An additive for a hydraulic material according to any of the preceding claims, wherein the polyamine compound having a side chain (1) and optionally a side chain (2) and/or (3) is obtainable by reaction of a polyamine compound (I) to introduce side chain (1) and, when present, side chains (2) and/or (3), these side chains being introduced in any order, wherein introduction of side chain (1) is by reaction with a compound of the formula $R^1-X^1$, wherein $R^1$ is a hydrocarbon group of 4 - 30 carbon atoms and $X^1$ contains a functional group capable of reacting with an amino group.

7. An additive for a hydraulic material according to claim 6, wherein $X^1$ is a glycidyl ether, epoxy, isocyanate, (meth) acrylate, halogenated alkyl or carboxylic acid group.

8. A drying shrinkage reducing-additive composition for a hydraulic material comprising at least one drying shrinkage reducing-additive for a hydraulic material set forth in any of the preceding claims and a dispersing agent.

9. Use of an additive according to any of claims 1 to 7 or an additive composition according to claim 8 in the preparation of a hydraulic material.

## Patentansprüche

1. Die Trocknungsschrumpfung reduzierendes Zusatzmittel für ein hydraulisches Material, das eine Polyaminverbindung umfasst, die eine Kohlenwasserstoffgruppe von 4 - 30 Kohlenstoffatomen als Seitenkette (1) als wesentliche Komponente aufweist.

2. Zusatzmittel für ein hydraulisches Material nach Anspruch 1, wobei die Polyaminverbindung des Weiteren als Seitenkette (2) mindestens eine Gruppe umfasst ausgewählt aus der Klasse bestehend aus Oxyalkylengruppen von 2 - 4 Kohlenstoffatomen; -COOZ (wobei Z für ein Wasserstoffatom, ein einwertiges Metall, ein zweiwertiges Metall, eine Ammoniumgruppe, eine organische Amingruppe oder ein - $(R^2O)_n-R^3$ steht, wobei $R^2O$ für ein Glied oder eine Mischung von zwei oder mehreren Gliedern ausgewählt aus Oxyalkylengruppen von 2 - 18 Kohlenstoffatomen steht, n für eine durchschnittliche Additionsmolekülzahl von Oxyalkylengruppen ($R^2O$) steht und im Bereich von 1 - 500 liegt und $R^3$ für ein Wasserstoffatom oder eine Kohlenwasserstoffgruppe von 1 - 3 Kohlenstoffatomen steht); und $-SO_3W$ (wobei W für ein Wasserstoffatom, ein einwertiges Metall, ein zweiwertiges Metall, eine Ammoniumgruppe oder eine organische Amingruppe steht).

3. Zusatzmittel für ein hydraulisches Material nach Anspruch 2, wobei die Seitenkette (2) -COOZ ist (wobei Z für ein Wasserstoffatom, ein einwertiges Metall, ein zweiwertiges Metall, eine Ammoniumgruppe, eine organische Amingruppe oder ein -$(R^2O)_n$-$R^3$ steht, wobei $R^2O$ für ein Glied oder eine Mischung von zwei oder mehreren Gliedern ausgewählt aus Oxyalkylengruppen von 2 - 18 Kohlenstoffatomen steht, n für eine durchschnittliche Additionsmolekülzahl von Oxyalkylengruppen ($R^2O$) steht und im Bereich von 1 - 500 liegt, und $R^3$ für ein Wasserstoffatom oder eine Kohlenwasserstoffgruppe von 1 - 3 Kohlenstoffatomen steht.

4. Zusatzmittel für ein hydraulisches Material nach einem der Ansprüche 1 - 3, wobei die Polyaminverbindung des Weiteren -COOZ' (wobei Z' für eine Kohlenwasserstoffgruppe von 1 - 3 Kohlenstoffatomen steht) als Seitenkette (3) umfasst.

5. Zusatzmittel für ein hydraulisches Material nach Anspruch 4, wobei die Seitenkette (3) in einem Verhältnis von nicht mehr als 2,4 je eine Seitenkette (1) vorliegt.

6. Zusatzmittel für ein hydraulisches Material nach einem der vorhergehenden Ansprüche, wobei die Polyaminverbindung, die eine Seitenkette (1) und wahlweise eine Seitekette (2) und/oder (3) aufweist, durch Reaktion einer Polyaminverbindung (I) erhältlich ist, um eine Seitenkette (1) und, liegen sie vor, die Seitenketten (2) und /oder (3) einzuführen, wobei diese Seitenketten in irgendeiner Reihenfolge eingeführt werden, wobei das Einführen der Seitenkette (1) durch Reaktion mit einer Verbindung der Formel $R^1$-$X^1$ erfolgt, wobei $R^1$ eine Kohlenwasserstoffgruppe von 4 - 30 Kohlenstoffatomen ist und $X^1$ eine funktionelle Gruppe enthält, die des Reagierens mit einer Aminogruppe fähig ist.

7. Zusatzmittel für ein hydraulisches Material nach Anspruch 6, wobei $X^1$ eine Glycidylether-, Epoxy-, Isocyanat-, (Meth)acrylat-, halogenierte Alkyl- oder Carbonsäuregruppe ist.

8. Die Trocknungsschrumpfung reduzierende Zusatzmittelzusammensetzung für ein hydraulisches Material umfassend mindesten ein die Trocknungsschrumpfung reduzierendes Zusatzmittel für ein hydraulisches Material, das in irgendeinem der vorhergehenden Ansprüche aufgeführt ist, und ein Dispergiermittel.

9. Verwendung eines Zusatzmittels nach einem der Ansprüche 1 bis 7 oder eine Zusatzmittelzusammensetzung nach Anspruch 8 bei der Herstellung eines hydraulischen Materials.

## Revendications

1. Additif de réduction du retrait au séchage d'un matériau hydraulique, dont un composant essentiel est un composé de type polyamine portant un groupement hydrocarbure à 4 - 30 atomes de carbone comme chaîne latérale (1).

2. Additif pour matériau hydraulique selon la revendication 1, où ledit composé de type polyamine comprend également comme chaîne latérale (2) au moins un groupement sélectionné dans le groupe consistant en des groupements oxyalkylènes à 2- 4 atomes de carbone ; -COOZ (où Z représente un atome d'hydrogène, un métal monovalent, un métal divalent, un groupement ammonium, un groupement aminé organique ou -$(R^2O)_n$-$R^3$, où $R^2O$ représente un membre ou un mélange de deux ou plusieurs membres sélectionné(s) parmi des groupements oxyalkylènes à 2 - 18 atomes de carbone, n représente le nombre moyen de moles de groupements oxyalkylènes ($R^2O$) ajoutées et est compris entre 1 et 500, et $R^3$ représente un atome d'hydrogène ou un groupement hydrocarbure à 1 - 3 atomes de carbone) ; et -$SO_3W$ (où W représente un atome d'hydrogène, un métal monovalent, un métal divalent, un groupement ammonium ou un groupement aminé organique).

3. Additif pour matériau hydraulique selon la revendication 2, où ladite chaîne latérale (2) correspond à COOZ (où Z représente un atome d'hydrogène, un métal monovalent, un métal divalent, un groupement ammonium, un groupement aminé organique ou - $(R^2O)_n$-$R^3$, où $R^2O$ représente un membre ou un mélange de deux ou plusieurs membres sélectionné(s) parmi des groupements oxyalkylènes à 2 - 18 atomes de carbone, n représente le nombre moyen de moles de groupements oxyalkylènes ($R^2O$) ajoutées et est compris entre 1 et 500, et $R^3$ représente un atome d'hydrogène ou un groupement hydrocarbure à 1 - 3 atomes de carbone).

4. Additif pour matériau hydraulique selon l'une quelconque des revendications 1-3, où ledit composé de type polyamine comprend également une chaîne latérale (3) correspondant à -COOZ' (où Z' représente un groupement hydrocarbure à 1 - 3 atomes de carbone) .

**5.** Additif pour matériau hydraulique selon la revendication 4, où ladite chaîne latérale (3) est présente en un rapport qui ne dépasse pas 2,4 par chaîne latérale (1).

**6.** Additif pour matériau hydraulique selon l'une quelconque des revendications précédentes, où le composé de type polyamine présente une chaîne latérale (1) et, en option, une chaîne latérale (2) et/ou (3) et peut être obtenu par réaction d'un composé de type polyamine (I) pour introduire une chaîne latérale (1) et, le cas échéant, la chaîne latérale (2) et/ou (3), l'introduction de ces chaînes latérales étant effectuée dans tout ordre et l'introduction de la chaîne latérale (1) faisant intervenir une réaction avec un composé de formule $R^1$-$X^1$, où $R^1$ représente un groupement hydrocarbure à 4-30 atomes de carbone et $X^1$ contient un groupement fonctionnel capable de réagir avec un groupement amino.

**7.** Additif pour matériau hydraulique selon la revendication 6, où $X^1$ représente l'éther glycidylique ou un groupement époxy, isocyanate, (méth)acrylate, alkyle halogéné ou acide carboxylique.

**8.** Composition additive de réduction du retrait au séchage d'un matériau hydraulique, qui comprend au moins un additif de réduction du retrait au séchage d'un matériau hydraulique selon l'une quelconque des revendications précédentes et un agent dispersant.

**9.** Utilisation d'un additif selon l'une quelconque des revendications 1 à 7 ou d'une composition additive selon la revendication 8 dans la préparation d'un matériau hydraulique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 8053522 A
- JP 8290948 A
- JP 8290955 A
- JP 9002855 A
- JP 10081549 A
- JP 59021557 A
- JP 62061450 A
- JP 59003430 A
- JP 2825855 B
- JP 2001247346 A
- JP 62068806 A
- JP 1113419 A
- JP 7267705 A
- JP 2508113 B
- JP 62216950 A
- JP 1226757 A
- JP 5036377 B
- JP 5170501 A
- JP 6191918 A
- JP 5043288 A
- JP 58038380 B
- JP 59018338 B
- JP 62119147 A
- JP 6271347 A
- JP 6298555 A
- JP 7223852 A
- JP 2003138738 A
- JP 7054645 A
- JP 8208769 A
- JP 8208770 A